# EUROPEAN PATENT APPLICATION

(11) **EP 4 564 921 A1**
(43) Date of publication of application: **04.06.2025**
(21) Application number: 23851282.6
(22) Date of filing: 08.05.2023
(51) Int. Cl.: H04W 36/08

(54) **MPS MANAGEMENT METHOD AND RELATED APPARATUS**

(30) Priority: 09.08.2022 CN 202210958737
(71) Applicant: Huawei Technologies Co., Ltd., Shenzhen, Guangdong 518129 (CN)
(72) Inventor: KONG, Lingshuai, Shenzhen, Guangdong 518129 (CN); LI, Jiaojiao, Shenzhen, Guangdong 518129 (CN); LI, Bing, Shenzhen, Guangdong 518129 (CN); YANG, Fan, Shenzhen, Guangdong 518129 (CN)
(74) Representative: Gill Jennings & Every LLP
(86) International application number: PCT/CN2023/092710
(87) International publication number: WO 2024/032052

(57) **Abstract**

Embodiments of this application disclose an MPS management method and an apparatus. The method includes: A terminal device receives an RRC release message that includes an MPS priority indication and a redirected frequency, attempts to camp on a suitable cell on the redirected frequency or a specified RAT, and when successfully camping on a first cell and detecting that a first condition is met, sends, to the first cell, an RRC setup request message or an RRC resume request message that includes a first cause value, where the first condition is related to at least one of the MPS priority indication or the redirected frequency. In this way, validity of a priority of an MPS is managed, and communication impact caused by the terminal device incorrectly performing access based on the priority of the MPS on another terminal device that accesses a network is avoided.

## Description

This application claims priority to Chinese Patent Application No. 202210958737.9, filed with the China National Intellectual Property Administration on August 9, 2022 and entitled "MPS MANAGEMENT METHOD AND RELATED APPARATUS", which is incorporated herein by reference in its entirety.

### TECHNICAL FIELD

This application relates to the field of wireless communication, and in particular, to an MPS management method and a related apparatus.

### BACKGROUND

In the field of communication technologies, a network device usually considers redirecting a terminal device (for example, user equipment (User Equipment, UE)) to another frequency to implement load balancing. The network device may redirect the UE to another frequency of a same RAT (Radio Access Technology, radio access technology), or may redirect the UE to another RAT. For example, the UE operates in an NR (New Radio, new radio access technology) network, and the network may indicate to redirect the UE to an LTE (Long Term Evolution, long term evolution) network to operate. With the rapid development of wireless network communication technologies, mobile users have increasingly high requirements on quality of service of mobile networks. A priority service has become an effective means for more operators to improve satisfaction of the mobile users. A multimedia priority service (Multimedia Priority Service, MPS) means that a specific subscriber or another authorized person is allowed to preferentially obtain a network resource, especially in a case of network congestion or emergency, so that rescue, dispatch management, and other work can be completed in a timely manner. When a mobile user requests a priority service, the network device identifies the priority service and preferentially processes the priority service compared with a common service. In a case of network congestion or insufficient resources, a priority service sent by a mobile user at a high priority service level may be processed with a high priority by the network device, to meet a requirement of the mobile user with the high priority.

To enable a terminal device that has not subscribed to an MPS or a terminal device that has not executed an MPS to enjoy MPS priority processing in a high-priority service, the conventional technology may support a network device in indicating, during redirection, that the terminal device can use a priority of the MPS during subsequent access.

However, the terminal device may not be redirected to a specified frequency or a specified RAT based on a requirement of the network device, and even redirection may fail. In the foregoing case, it is not clear whether the terminal device can still use the priority of the MPS for access.

### SUMMARY

Embodiments of the present invention provide an MPS management method and a related apparatus, to manage validity of an MPS priority indication in a redirection process.

A first aspect of embodiments of this application provides an MPS management method. The method may be performed by a terminal device in a wireless network, or may be performed by a component (for example, a processor, a chip, or a chip system) of the terminal device. The method includes:
After receiving a radio resource control RRC release message sent by a network device, a terminal device releases or suspends a connection and attempts to camp on a cell, where the RRC release message includes a multimedia priority service MPS priority indication and a redirected frequency. Then, the terminal device sends an RRC setup request message or an RRC resume request message to a first cell on which the terminal device successfully camps, where the RRC setup request message is used to request to set up a connection to the first cell, the RRC setup request message includes an establishment cause, the RRC resume request message is used to request to resume a connection to the first cell, and the RRC resume request message includes a resume cause. When a first condition is met, the establishment cause or the resume cause is a first cause value; or when a first condition is not met, the establishment cause or the resume cause is a second cause value, where the first condition is related to at least one of the MPS priority indication or the redirected frequency.

In a redirection process, the terminal device attempts, based on redirected information in the RRC release message, to camp on a suitable cell on the redirected frequency or a specified RAT. If the terminal device successfully camps on the redirected frequency or the specified RAT, the terminal device performs access based on the MPS priority indication. However, in an actual communication process, the terminal device may not be redirected to the specified frequency or the specified RAT based on an expectation of the network device, and even redirection may fail. If the terminal device fails to camp on the specified frequency or the specified RAT, the terminal device continues to attempt to search for and camp on a cell on another frequency or RAT. If the terminal device successfully camps on the cell on the another frequency or RAT, the terminal device initiates an RRC connection request or RRC connection resume. In this case, whether the terminal device still uses a priority of an MPS to access the frequency or the RAT cannot be clarified. It may be understood that, the network device may redirect the terminal device to the specified frequency or the specified RAT because a load, a network status, or the like of the specified frequency or the specified RAT supports processing of an MPS priority service of the terminal device. If the terminal device chooses to access the cell on the another frequency or RAT for camping, whether a load, a network status, or the like of the cell on the frequency or the RAT supports the MPS priority service of the terminal device cannot be clarified. If the terminal device still continues to use the priority of the MPS for access when the frequency or the RAT cannot support use of the priority of the MPS, another terminal device that accesses a network may be affected.

Therefore, in the manner provided in this application, after receiving the RRC release message delivered by the network device, the terminal device attempts, based on the redirected information in the RRC release message, to camp on the suitable cell on the redirected frequency or the specified RAT. If the terminal device cannot find the suitable cell on the redirected frequency, the terminal device attempts to camp on a cell on the specified RAT (that is, a redirected RAT). If the terminal device cannot select the suitable cell on the specified RAT, the terminal device performs a cell selection process based on an actual network status or information stored in the terminal device, to select the suitable cell. If the terminal device successfully camps on the first cell, for example, when the terminal device has a service transmission requirement, the terminal device may send the RRC setup request message or the RRC resume request message to the network device of the first cell. In this case, the terminal device may determine, based on whether the first condition is met, the establishment cause or the resume cause carried in the setup request message or the resume request message. The first condition is related to at least one of the MPS priority indication or the redirected frequency. The terminal device may set the establishment cause or the resume cause to the first cause value only when the first condition is met. The first cause value is set, so that the terminal device performs access based on the priority of the MPS in a connection setup or resume process after redirection, to ensure a service priority and service continuity. In this way, validity of the priority of the MPS is further managed, and communication impact caused by the terminal device incorrectly performing access based on the priority of the MPS on the another terminal device that accesses the network is avoided.

In a possible implementation, when detecting that the first condition is met, the terminal device sends the RRC setup request message or the RRC resume request message to the first cell, where the first condition is used to control the terminal device to use the priority of the MPS, and includes at least one of the following:
condition 1: the first cell belongs to the redirected frequency;
condition 2: the first cell and the redirected frequency correspond to a same RAT;
condition 3: the RRC setup request message or the RRC resume request message is a 1^{st} RRC setup request message or RRC resume request message sent after the RRC release message is received;
condition 4: a timer does not expire, and the timer indicates valid duration of the MPS priority indication; or
condition 5: the first cell belongs to a first area, and the first area is a home area or a service area of a terminal device.

In the possible implementation, a valid use scope, a valid use scenario, and the valid duration of the MPS priority indication are clarified, and communication impact caused by the terminal device incorrectly performing access based on the priority of the MPS on the another terminal device that accesses the network is avoided. The first condition is set mainly in consideration of the following:
1. The condition 1 and the condition 2 are set mainly because factors such as loads or network statuses of different frequencies or RATs may be different. The network device may redirect the terminal device to the specified frequency or the specified RAT because the load, the network status, or the like of the frequency or the RAT supports the terminal device in executing the MPS priority service. If the terminal device chooses to access another frequency or RAT, and a cell on the frequency or the RAT does not support the terminal device in executing the MPS priority service, the terminal device may affect network performance of an accessed cell, and communication quality of the terminal device and the another terminal device is further affected.
2. The condition 3 is set, to be specific, the following is limited: The terminal device can perform access by using the priority of the MPS only when RRC connection setup or connection resume initiated by the terminal device after the terminal device receives the RRC release message carrying the MPS priority indication is a 1^{st} access attempt on the specified frequency or RAT. The foregoing conditions are set, so that the terminal device may adjust whether to use the MPS priority service for access according to a network policy. If the network device rejects the connection setup or resume, for the priority of the MPS, requested by the terminal device, the terminal device should no longer use the priority of the MPS for access in a subsequent connection setup or resume process, to increase an access success probability of the terminal device.
3. The condition 4 is set mainly because in a redirection process, if the terminal device fails to attempt to camp on the cell on the specified frequency or the specified RAT, the terminal device successfully camps on a cell after long-time cell search. In this case, whether the terminal device still accesses the cell based on the priority of the MPS needs to be limited and described. The valid duration of the MPS priority indication is clarified to ensure that the MPS priority service is processed in a timely and valid manner.
4. The condition 5 is set mainly because an access identity or an access class that is related to the priority of the MPS and that is delivered by a non-access stratum is valid only in a home country. Therefore, the MPS priority indication allocated by the network may also be limited to be valid only in the home country or a home public land mobile network HPLMN. In addition, if the priority of the MPS is assigned to an RRC release message received by the terminal device in a current serving PLMN or serving country, it does not mean that the terminal device can use the priority of the MPS in another PLMN or another country. In this case, it needs to be limited and described.

In a possible implementation, the first cause value is an MPS priority access cause value. When a cell on which the terminal device attempts to camp is an NR cell, the first cause value sent by the terminal device is MPS priority access.

In a possible implementation, the first cause value is a high priority access cause value. When a cell on which the terminal device attempts to camp is an LTE cell or an evolved universal terrestrial radio access E-UTRA cell, the first cause value sent by the terminal device is high priority access.

In a possible implementation, the second cause value is a cause value received from the non-access stratum.

In the foregoing three possible implementations, after receiving the RRC release message including the redirected information, the terminal device initiates an RRC connection setup process or connection resume process, and may include the establishment cause or the resume cause in the connection setup request message or the connection resume request message, to notify the network device of a connection establishment cause or a connection resume cause. The cause values of the MPS priority access and the high priority access are respectively associated with MPS priority services accessing different RATs. When the first condition is met, the terminal device sets the first cause value to indicate that the connection establishment cause or the connection resume cause is related to the MPS priority service, so that the network can process the service based on the priority of the MPS, to increase a connection setup or resume success possibility, and reduce a delay of setting up a service connection or a delay of sending service data. If the first condition is not met, the terminal device performs access based on the cause value indicated by the non-access stratum, and the network device does not process the connection setup or connection resume based on the MPS priority service, to avoid impact caused by the terminal incorrectly performing access based on the priority of the MPS on the another terminal device.

In a possible implementation, when the first condition is not met, the MPS priority indication is invalid.

In the possible implementation, if the first condition is not met, it is considered that the MPS priority indication is invalid, and access is performed by using the cause value indicated by the non-access stratum, to avoid impact caused by the terminal incorrectly performing access based on the priority of the MPS on the another terminal device. In a subsequent connection setup or connection resume process, because the MPS priority indication is invalid, the terminal device no longer performs access by using the priority of the MPS.

In a possible implementation, before sending the RRC setup request message or the RRC resume request message, the terminal receives first indication information, where the first indication information indicates that a first access identity or a first access class is allowed for access; and
when the first condition is met, considers that an access attempt is allowed.

In the possible implementation, before sending the RRC setup request message or the RRC resume request message, the terminal device needs to perform unified access control. The terminal device receives the first indication information sent by the network device, where the first indication information may indicate whether the network device allows an access attempt corresponding to the first access identity or the first access class. When the first indication information indicates that the access attempt corresponding to the first access identity or the first access class is allowed, the terminal device determines whether the first condition is met. If the first condition is met, the terminal device thinks or considers that the access attempt is allowed, and sends the RRC connection setup request or connection resume request.

In the implementation, the terminal device determines, by using the MPS priority indication only when the first condition is met, whether the access attempt is allowed, to avoid an access attempt failure caused because the terminal incorrectly considers that the access attempt is allowed.

In a possible implementation, the terminal device determines the first condition based on second indication information sent by the network device.

In a possible implementation, the RRC release message further includes the second indication information.

After the terminal device receives the radio resource control RRC release message, the terminal device determines the first condition based on the second indication information sent by the network device.

In the foregoing two possible implementations, the first condition may be obtained from the network device, so that validity of the MPS priority indication is more flexibly configured.

A second aspect of embodiments of this application provides an MPS management method. The method may be performed by a network device, or may be performed by a component (for example, a processor, a chip, or a chip system) of the network device. The method includes:
A first network device sends a radio resource control RRC release message to a terminal device, where the RRC release message includes a multimedia priority service MPS priority indication and a redirected frequency.

A second network device receives an RRC setup request message or an RRC resume request message, where the RRC setup request message is used to request to set up a connection to a first cell, the RRC setup request message includes an establishment cause, the RRC resume request message is used to request to resume a connection to the first cell, the RRC resume request message includes a resume cause, the establishment cause or the resume cause is a first cause value or a second cause value, the first cause value or the second cause value is related to a first condition, and the first condition is related to at least one of the MPS priority indication or the redirected frequency.

In this embodiment, in consideration of load balancing, the first network device delivers the RRC release message to the terminal device, so that the terminal device attempts, based on redirected information in the RRC release message, to camp on a suitable cell on the redirected frequency or a specified RAT. If the terminal device successfully camps on the specified frequency or the specified RAT, the terminal device performs access based on the MPS priority indication. If the second network device receives the RRC setup request message or the RRC resume request message, the RRC setup request message or the RRC resume request message includes the first cause value, the first cause value is related to the first condition, and the first condition is related to at least one of the MPS priority indication or the redirected frequency. In this case, it indicates that the terminal device accesses a second network device when using a priority of an MPS. In this way, a condition for the terminal device to use the priority of the MPS is clarified, and validity of the priority of the MPS is managed, and communication impact caused by the terminal device incorrectly performing access based on the priority of the MPS on another terminal device that accesses a network is avoided.

In a possible implementation, the first condition includes at least one of the following:
the first cell belongs to the redirected frequency; the first cell and the redirected frequency correspond to a same RAT; the RRC setup request message or the RRC resume request message is a 1^{st} RRC setup request message or RRC resume request message sent after the RRC release message is received; a timer does not expire, and the timer indicates valid duration of the MPS priority indication; or the first cell belongs to a first area, and the first area is a home area or a service area of a terminal device.

In the possible implementation, a valid use scope, a valid use scenario, and the valid duration of the priority of the MPS are clarified, and communication impact caused by the terminal device incorrectly performing access based on the priority of the MPS on the another terminal device that accesses the network is avoided.

In a possible implementation, the first cause value is an MPS priority access cause value.

In a possible implementation, the first cause value is a high priority access cause value.

In a possible implementation, the second cause value is a cause value received from a non-access stratum.

In the foregoing three possible implementations, the cause values of the MPS priority access and the high priority access are respectively associated with MPS priority services accessing different RATs. When the first condition is met, the terminal device sets the first cause value to indicate that the connection establishment cause or the connection resume cause is related to the MPS priority service, so that the network can process the service based on the priority of the MPS, to increase a connection setup or resume success possibility, and reduce a delay of setting up a service connection or a delay of sending service data. If the first condition is not met, the terminal device performs access based on the cause value indicated by the non-access stratum, and the network device does not process the connection setup or connection resume based on the MPS priority service, to avoid impact caused by the terminal incorrectly performing access based on the priority of the MPS on the another terminal device.

Optionally, in a possible implementation of the second aspect, before receiving the RRC setup request message or the RRC resume request message, the network device sends indication information to the terminal device, where the indication information indicates that a first access identity or a first access class is allowed for access.

In the possible implementation, before sending the RRC setup request message or the RRC resume request message, the terminal device needs to perform unified access control. The terminal device receives first indication information sent by the network device, where the first indication information indicates whether the network device allows an access attempt corresponding to the first access identity or the first access class. When the first indication information indicates that the access attempt corresponding to the first access identity or the first access class is allowed, the terminal device determines whether the first condition is met. If the first condition is met, the terminal device thinks or considers that the access attempt is allowed, and sends the RRC connection setup request or connection resume request.

In the implementation, the terminal device determines, by using the MPS priority indication only when the first condition is met, whether the access attempt is allowed, to avoid an access attempt failure caused because the terminal incorrectly considers that the access attempt is allowed.

In a possible implementation, the terminal device determines the first condition based on second indication information sent by the network device.

In a possible implementation, the RRC release message further includes the second indication information.

In the foregoing two possible implementations, the first condition may be obtained from the network device, so that validity of the MPS priority indication is more flexibly configured.

A third aspect of embodiments of this application provides a communication apparatus. For beneficial effects, refer to the descriptions of the first aspect. Details are not described herein again. The communication apparatus has a function of implementing a behavior in the method example in the first aspect. The function may be implemented by hardware, or may be implemented by hardware executing corresponding software. The hardware or the software includes one or more modules corresponding to the foregoing function. In a possible design, the communication apparatus includes: a receiving unit, configured to receive a radio resource control RRC release message, where the RRC release message includes a multimedia priority service MPS priority indication and a redirected frequency; and a sending unit, configured to send an RRC setup request message or an RRC resume request message, where the RRC setup request message is used to request to set up a connection to a first cell, the RRC setup request message includes an establishment cause, the RRC resume request message is used to request to resume a connection to the first cell, and the RRC resume request message includes a resume cause. When a first condition is met, the establishment cause or the resume cause is a first cause value; or when a first condition is not met, the establishment cause or the resume cause is a second cause value, where the first condition is related to at least one of the MPS priority indication or the redirected frequency. The units may perform corresponding functions in the method example in the first aspect. For details, refer to the detailed descriptions in the method example. Details are not described herein again.

A fourth aspect of embodiments of this application provides a communication apparatus. For beneficial effects, refer to the descriptions of the second aspect. Details are not described herein again. The communication apparatus has a function of implementing a behavior in the method example in the second aspect. The function may be implemented by hardware, or may be implemented by hardware executing corresponding software. The hardware or the software includes one or more modules corresponding to the foregoing function. In a possible design, the communication apparatus includes a sending unit, configured to send a radio resource control RRC release message to a terminal device, where the RRC release message includes a multimedia priority service MPS priority indication and a redirected frequency; and a receiving unit, configured to receive an RRC setup request message or an RRC resume request message, where the RRC setup request message is used to request to set up a connection to a first cell, the RRC setup request message includes an establishment cause, the RRC resume request message is used to request to resume a connection to the first cell, the RRC resume request message includes a resume cause, the establishment cause or the resume cause is a first cause value or a second cause value, the first cause value or the second cause value is related to a first condition, and the first condition is related to at least one of the MPS priority indication or the redirected frequency. The units may perform corresponding functions in the method example in the second aspect. For details, refer to the detailed descriptions in the method example. Details are not described herein again.

A fifth aspect of embodiments of this application provides a communication apparatus, including a processor and an interface circuit. The interface circuit is configured to receive a signal from another communication apparatus and transmit the signal to the processor, or send a signal from the processor to another communication apparatus. The processor is configured to implement the method in any one of the first aspect or the possible implementations of the first aspect by using a logic circuit or by executing code instructions.

A sixth aspect of embodiments of this application provides a communication apparatus, including a processor and an interface circuit. The interface circuit is configured to receive a signal from another communication apparatus and transmit the signal to the processor, or send a signal from the processor to another communication apparatus. The processor is configured to implement the method in any one of the second aspect or the possible implementations of the second aspect by using a logic circuit or by executing code instructions.

A seventh aspect of embodiments of this application provides a communication system. The communication system includes the communication apparatus in the fifth aspect and/or the communication apparatus in the sixth aspect.

An eighth aspect of embodiments of this application provides a computer program product. When the computer product is executed by a computer, the method in any one of the first aspect or the possible implementations of the first aspect, or the method in any one of the second aspect or the possible implementations of the second aspect is implemented.

A ninth aspect of embodiments of this application provides a computer-readable storage medium. The storage medium stores a computer program or instructions. When the computer program or the instructions are executed by a communication apparatus, the method in any one of the first aspect or the possible implementations of the first aspect, or the method in any one of the second aspect or the possible implementations of the second aspect is implemented.

For technical effects brought by any one of the third aspect, the fifth aspect, the seventh aspect, the eighth aspect, and the ninth aspect or the possible implementations thereof, refer to the technical effects brought by the first aspect or different possible implementations of the first aspect. Details are not described herein again.

For technical effects brought by any one of the fourth aspect, the sixth aspect, the seventh aspect, the eighth aspect, and the ninth aspect, or the possible implementations thereof, refer to the technical effects brought by the second aspect or different possible implementations of the second aspect. Details are not described herein again.

According to a tenth aspect, this application provides a communication method, including: A network device sends a radio resource control RRC release message to a terminal device, where the RRC release message includes a multimedia priority service MPS priority indication and a redirected frequency. The terminal device receives the radio resource control RRC release message. The terminal device sends an RRC setup request message or an RRC resume request message, where the RRC setup request message is used to request to set up a connection to a first cell, the RRC setup request message includes an establishment cause, the RRC resume request message is used to request to resume a connection to the first cell, and the RRC resume request message includes a resume cause. When a first condition is met, the establishment cause or the resume cause is a first cause value; or when a first condition is not met, the establishment cause or the resume cause is a second cause value, where the first condition is related to at least one of the MPS priority indication or the redirected frequency. The network device receives the RRC setup request message or the RRC resume request message.

According to an eleventh aspect, this application provides a communication system, including a terminal device configured to perform the method in the first aspect and a network device configured to perform the method in the second aspect.

According to a twelfth aspect, this application provides a chip system. The chip system includes a processor, and the processor is configured to implement functions of the terminal device in the methods in the foregoing aspects. In a possible design, the chip system further includes a memory, configured to store program instructions and/or data. The chip system may include a chip, or may include a chip and another discrete component.

According to a thirteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

### BRIEF DESCRIPTION OF DRAWINGS

FIG. 1 is a diagram of an architecture of a communication system to which an embodiment of this application is applied;
FIG. 2a is a schematic flowchart of an RRC connection setup process according to an embodiment of this application;
FIG. 2b is a schematic flowchart of another RRC connection setup process according to an embodiment of this application;
FIG. 3a is a schematic flowchart of an RRC connection resume process according to an embodiment of this application;
FIG. 3b is a schematic flowchart of another RRC connection resume process according to an embodiment of this application;
FIG. 4 is a schematic flowchart of a unified access control process according to an embodiment of this application;
FIG. 5 is a schematic flowchart of an MPS management method according to an embodiment of this application;
FIG. 6 is a schematic flowchart of another MPS management method according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of another communication apparatus according to an embodiment of this application;
FIG. 10 is a diagram of a structure of another communication apparatus according to an embodiment of this application; and
FIG. 11 is a diagram of a structure of another communication apparatus according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may know that with development of technologies and emergence of new scenarios, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms in such a way are interchangeable in proper circumstances, so that embodiments described herein can be implemented in other orders than the order illustrated or described herein. Moreover, the terms "including", "having", and any other variants thereof are intended to cover non-exclusive inclusion, for example, a process, method, system, product, or device that includes a series of steps or modules is not necessarily limited to those steps or modules that are clearly listed, but may include other steps or modules that are not clearly listed or that are inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the units in this application is logical division. In actual application, there may be another division manner. For example, a plurality of units may be combined or integrated into another system, or some features may be ignored or not performed. In addition, the displayed or discussed mutual coupling or direct coupling or communication connection may be performed through some interfaces, and the indirect coupling or communication connection between units may be in an electrical form or another similar form. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

It may be understood that, an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application. For same or similar parts in embodiments of this application, refer to each other.

In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, or implementation method based on an internal logical relationship thereof. The foregoing descriptions are implementations of this application, but are not intended to limit the protection scope of this application.

It may be understood that, in this application, both "when" and "if" mean that an apparatus performs corresponding processing in an objective situation, but do not constitute a limitation on time, do not require that the apparatus has a determining action during implementation, and do not mean any other limitation.

In this application, unless otherwise specified, "at least one" is intended to represent "one or more", and "a plurality of" is intended to represent "two or more".

In addition, the terms "system" and "network" in this specification may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural. The character "/" generally indicates an "or" relationship between the associated objects.

The special term "example" herein means "used as an example, an embodiment, or an illustration". Any embodiment described as "an example" is not necessarily explained as being superior or better than other embodiments.

This application may be applied to protocol frameworks of a plurality of wireless communication systems. The wireless communication system may include but is not limited to an LTE system, an NR system, a future evolved communication system, and the like. The future evolved communication system is, for example, a future network or a 6th generation communication system.

The following describes a scenario to which an MPS management method provided in embodiments of this application is applied.

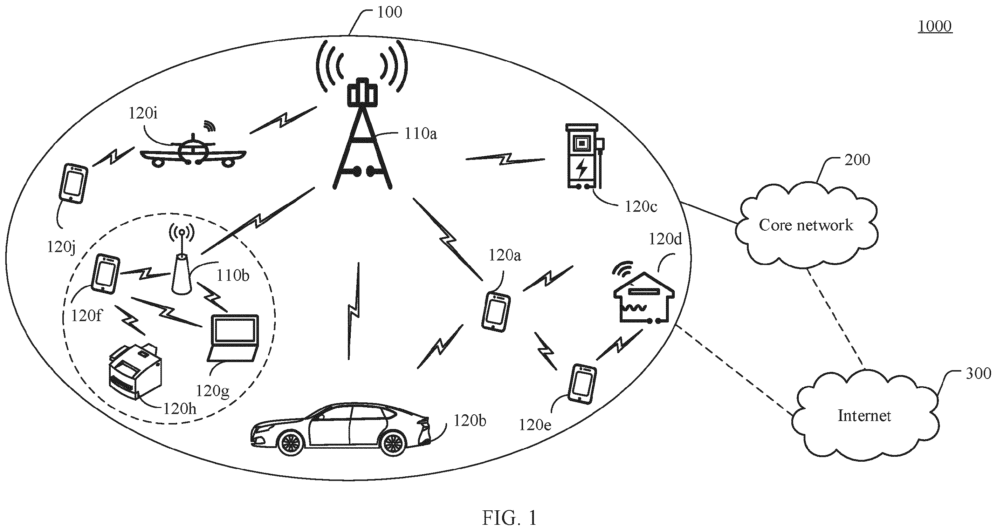

FIG. 1 is a diagram of an architecture of a communication system 1000 to which an embodiment of this application is applied.

As shown in FIG. 1, the communication system includes a radio access network 100 and a core network 200. Optionally, the communication system 1000 may further include an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1 is only a diagram. The communication system may further include another network device, for example, may further include a wireless relay device and a wireless backhaul device that are not shown in FIG. 1.

The network device is an access device that is used by the terminal device to access the communication system in a wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications in the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form used by the network device are not limited in embodiments of this application.

The terminal device is a device that has a wireless transceiver function, and may send a signal to the network device, or receive a signal from the network device. The terminal device may also be referred to as user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an airplane, a ship, a robot, a robotic arm, a smart home device, or the like. A specific technology and a specific device form used by the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication may be performed between a network device and a terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem herein including the function of the network device may be a control center in the foregoing application scenarios such as the smart grid, the industrial control, the intelligent transportation, and the smart city. The function of the terminal device may alternatively be performed by a module (for example, a chip or a modem) in the terminal device, or may be performed by an apparatus including the function of the terminal.

The foregoing describes the scenario to which the MPS management method provided in embodiments of this application is applied. The following describes in detail a specific implementation process of the MPS management method provided in embodiments of this application.

First, technical terms in embodiments of this application are described.

### (1) Redirection

In a redirection process, a network device indicates, by using redirected information (Redirected Carrier Info), a terminal device to attempt to camp on a cell on a specified frequency. The redirected information may be included in an RRC (Radio Resource Control, radio resource control) release message, and the redirected information may include a redirected frequency. The redirected information may further indicate a redirected radio access technology RAT. For example, if the redirected information includes NR carrier information (Carrier Info), the terminal device is indicated to attempt to camp on an NR cell. Alternatively, for example, if the redirected information includes redirected carrier information-E-UTRA (Redirected CarrierInfo-EUTRA), the terminal device is indicated to attempt to camp on an E-UTRA cell.

When the RRC release message includes the redirected information, the terminal device should attempt to camp on a suitable cell (suitable cell) on the redirected frequency indicated by the redirected information. If the terminal device cannot find the suitable cell on the redirected frequency to camp on, the terminal device may attempt to camp on a suitable cell on a specified RAT. If the terminal device does not find the suitable cell on the specified RAT, the terminal device may perform a cell selection process by using information stored in the terminal device, to find a suitable cell to camp on. In this case, the terminal device may select and camp on a cell on a non-redirected frequency or a non-redirected RAT.

### (2) RRC connection setup process

The RRC connection setup process is used to set up an RRC connection. When starting the RRC connection setup process, the terminal device should perform unified access control (unified access control, UAC), to determine whether a current access attempt is allowed.

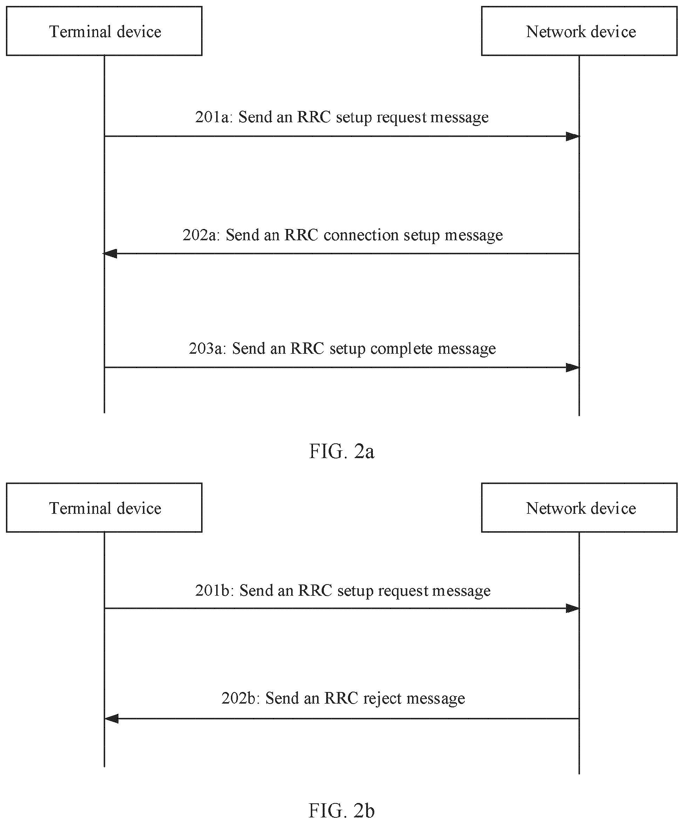

When the current access attempt is allowed, FIG. 2a is a schematic flowchart of an RRC connection setup process according to an embodiment of this application. The RRC connection setup process is specifically as follows:
Step 201a: A terminal device sends an RRC setup request (RRC Setup Request) message to a network device. The request message includes an establishment cause (Establishment Cause).

Step 202a: If the network device allows the terminal device to set up a connection, the network device sends an RRC connection setup (RRC Setup) message to the terminal device, where the RRC connection setup message includes a configuration required by the terminal device to set up the connection.

Step 203a: After completing the configuration, the terminal device sends an RRC setup complete (RRC Setup Complete) message to the network device, and the RRC connection setup process ends.

If the network device does not allow the terminal device to set up a connection, FIG. 2b is a schematic flowchart of another RRC connection setup process according to an embodiment of this application. The RRC connection setup process is specifically as follows:
Step 201b: A terminal device sends an RRC setup request (RRC Setup Request) message to a network device.

Step 202b: The network device returns an RRC reject (RRC Reject) message to the terminal device. After receiving the RRC reject message, the terminal device reports a connection setup failure to a non-access stratum, and the RRC connection setup process ends.

### (3) RRC connection resume process

The RRC connection resume process is used to resume a suspended RRC connection. When starting the RRC connection resume process, the terminal device should perform unified access control, to determine whether a current access attempt is allowed.

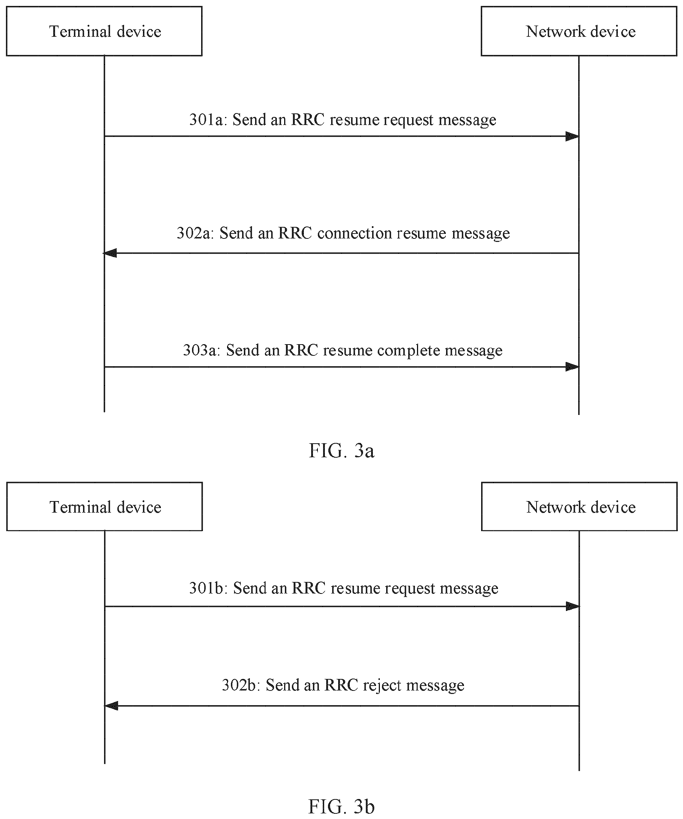

When the current access attempt is allowed, FIG. 3a is a schematic flowchart of an RRC connection resume process according to an embodiment of this application. The RRC connection resume process is specifically as follows:
Step 301a: A terminal device sends an RRC resume request (RRC Resume Request or RRC Resume Request1) message to a network device. The request message includes a resume cause (resume Cause).

Step 302a: If the network device allows the terminal device to resume a connection, the network device sends an RRC connection resume (RRC Resume) message to the terminal device, where the RRC connection resume message includes a configuration required by the terminal device to resume the connection.

Step 303a: After completing the configuration, the terminal device sends an RRC resume complete (RRC Resume Complete) message to the network device, and the RRC connection resume process ends.

If the network device does not allow the terminal device to resume a connection, FIG. 3b is a schematic flowchart of another RRC connection resume process according to an embodiment of this application. The RRC connection resume process is specifically as follows:
Step 301b: A terminal device sends an RRC resume request (RRC Resume Request or RRC Resume Request1) message to a network device. The request message includes a resume cause.

Step 302b: The network device returns an RRC reject (RRC Reject) message to the terminal device.

After receiving the RRC reject message, the terminal device reports a connection resume failure to a non-access stratum and discards a related configuration, and the RRC connection resume process ends.

### (4) Unified access control

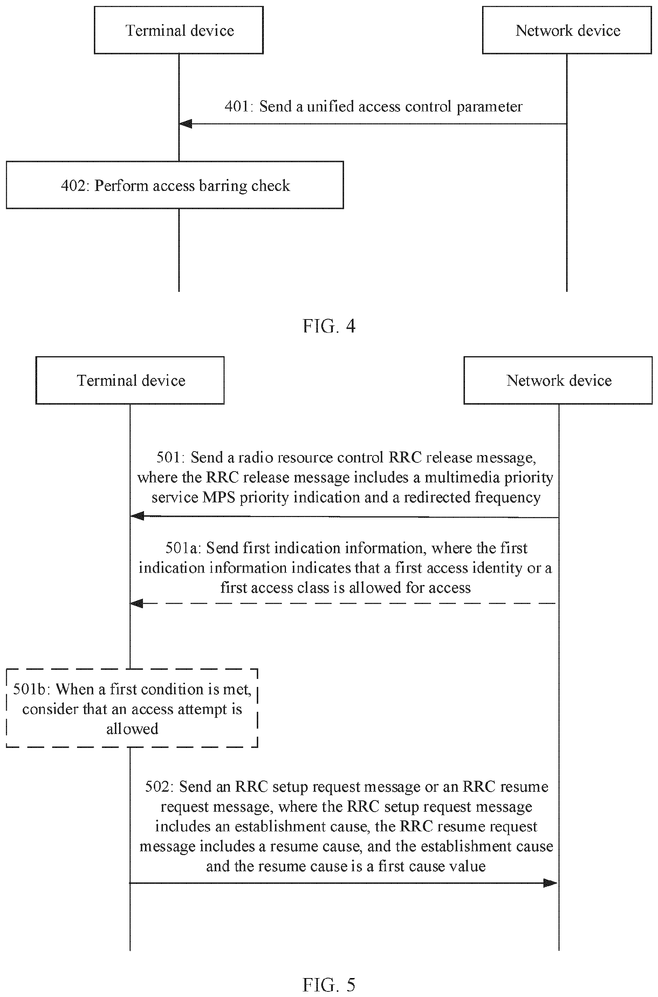

To avoid problems such as network overload and congestion caused by access of excessive terminal devices to one network device, the network device may perform access control on the terminal device by using a unified access control technology. A unified access control process is used to perform access barring check (Access barring check) on an access attempt. The access attempt may include an RRC connection setup attempt and an RRC connection resume attempt. FIG. 4 is a schematic flowchart of a unified access control process according to an embodiment of this application. The unified access control process is specifically as follows:
Step 401: A network device sends a unified access control parameter to a terminal device.

Step 402: The terminal device performs access barring check based on the unified access control parameter (for example, uac-BarringForAccessIdentity or ac-BarringForSpecial AC) broadcast by the network device, an access category (Access Category) delivered by a non-access stratum, and an access identity (Access Identity) or an access class (Access Class) delivered by the non-access stratum or generated by an access stratum.

For example, access control is implemented based on the access identity or the access class. A bit value corresponding to the access identity or the access class is used to determine whether a corresponding access attempt is allowed. If the bit value corresponding to the access identity or the access class is 0, it indicates that the corresponding access attempt is allowed. If the bit value corresponding to the access identity or the access class is 1, it indicates that the corresponding access attempt is not allowed. For an MPS, the access identity in an NR system may be an access identity 1 (Access Identity 1), and the access class in an LTE system may be an access class 12, 13, or 14 (Access Class 12, 13 or 14). The access identity 1 or the access class 12, 13, or 14 is valid only in a home country (home country).

### (5) MPS priority indication

When the RRC release message includes the redirected information, the network device may further include the MPS priority indication in the RRC release message. The MPS priority indication indicates that the terminal device may perform access based on the MPS priority indication in subsequent access. For example, one or more of the following may be specifically included:
1. When the terminal device sends an RRC setup request, if RRC connection setup is a result of release including an MPS priority indication and redirection, the terminal device sets an establishment cause to MPS priority access (mps-Priority Access), for example, when a cell to which an RRC connection is set up is an NR cell; or the terminal device sets an establishment cause to high priority access (high Priority Access), for example, when a cell to which an RRC connection is set up is an E-UTRA cell.
2. When the terminal device sends an RRC resume request, if RRC connection resume occurs after release including an MPS priority indication and redirection, the terminal device sets a resume cause to MPS priority access, for example, when a cell to which an RRC connection is resumed is an NR cell; or the terminal device sets a resume cause to high priority access, for example, when a cell to which an RRC connection is resumed is an E-UTRA cell.
3. When the terminal device performs access barring check, for example, when the terminal device attempts to access an NR cell, if an access attempt is a result of release including an MPS priority indication and redirection, and an access identity 1 in a unified access control parameter broadcast in the NR cell indicates that access is allowed, the terminal device considers that the current access attempt is allowed. Alternatively, for example, when the terminal device attempts to access an E-UTRA cell, if an access attempt is a result of release including an MPS priority indication and redirection, and any one of an access class 12, 13, or 14 in a unified access control parameter broadcast in the E-UTRA cell indicates that access is allowed, the terminal device considers that the current access attempt is allowed.

The foregoing describes the technical terms provided in embodiments of this application. The following describes in detail a specific implementation process of the MPS management method provided in embodiments of this application.

FIG. 5 is a schematic flowchart of an MPS management method according to an embodiment of this application. The MPS management method shown in FIG. 5 is applied to the terminal device and the network device shown in FIG. 1. As shown in FIG. 5, the MPS management method includes the following steps 501 and 502.

Step 501: A first network device sends a radio resource control RRC release message to a terminal device, where the RRC release message includes a multimedia priority service MPS priority indication (Mps Priority Indication) and a redirected frequency. The terminal device receives the RRC release message.

In this embodiment, the first network device includes the MPS priority indication and the redirected frequency in the RRC release message, to indicate the terminal device to attempt to camp on a cell on a specified frequency, and the terminal device performs access based on the MPS priority indication in a connection setup process, a connection resume process, or a unified access control process after redirection, to ensure a priority and continuity of a service.

For example, the first network device may determine, based on a quality of service (Quality of service, QoS) feature or an allocation and retention priority (Allocation and Retention Priority, ARP) of the service of the terminal device, whether to include the MPS priority indication in the RRC release message. The MPS priority indication indicates that the terminal device can accept MPS processing. For example, the terminal device may set an establishment cause to mps-Priority Access when being redirected to an NR cell.

For example, the first network device may include redirected information (Redirected Carrier Info) in the RRC release message based on a factor such as a load or a network capability. The redirected information includes the redirected frequency, and the terminal device is redirected to the specified frequency.

For example, the redirected information further includes a redirected RAT, that is, the RRC release message includes the MPS priority indication, the redirected frequency, and the redirected RAT. For example, the redirected information includes NR carrier information (Carrier Info NR), and the redirected RAT is NR. The NR carrier information includes the redirected frequency, to indicate the terminal device to attempt to camp on a cell on a specified frequency of NR. For another example, the redirected information includes redirected carrier information-E-UTRA (Redirected CarrierInfo-EUTRA), and the redirected RAT is E-UTRA. The redirected carrier information-E-UTRA includes the redirected frequency, to indicate the terminal device to attempt to camp on a cell on a specified frequency of E-UTRA. The redirected RAT may be understood as a RAT corresponding to the redirected frequency.

Further, after receiving the RRC release message, the terminal device releases (release) or suspends (suspend) an RRC connection, and performs the following operations based on the redirected information included in the RRC release message:
(1) First, the terminal device attempts, based on the redirected information, to camp on a suitable cell on the specified frequency (that is, the redirected frequency). If the terminal device finds the suitable cell on the specified frequency, and camps on the suitable cell, for example, when the terminal device has a service transmission requirement, the terminal device may request RRC connection setup or RRC connection resume from the suitable cell.
(2) If the terminal device cannot find the suitable cell on the specified frequency, the terminal device attempts to camp on a cell on a specified RAT (that is, the redirected RAT). If the terminal device finds the suitable cell on the specified RAT, and camps on the suitable cell, for example, when the terminal device has a service transmission requirement, the terminal device may request RRC connection setup or RRC connection resume from the suitable cell.
(3) If the terminal device cannot select the suitable cell on the specified RAT, the terminal device performs a cell selection process based on an actual network status or information stored in the terminal device, to select the suitable cell. If the terminal device finds the suitable cell by using the cell selection process and camps on the suitable cell, for example, when the terminal device has a service transmission requirement, the terminal device may request RRC connection setup or RRC connection resume from the suitable cell. It should be noted that the suitable cell may not be a cell on the specified frequency and the specified RAT in the redirected information.

It may be understood that whether the terminal device requests the RRC connection setup or the RRC connection resume is related to a status of the terminal device. For example, if the RRC release message received by the terminal device does not include a suspend configuration (suspend Config), the terminal device enters an RRC idle (RRC_IDLE) state. When the terminal device has a service transmission requirement, the terminal device requests the RRC connection setup from the network device, and performs an RRC connection setup process. For another example, if the RRC release message received by the terminal device includes a suspend configuration, the terminal device enters an RRC inactive (RRC_INACTIVE) state. When the terminal device has a service transmission requirement, the terminal device requests the RRC connection resume from the network device, and performs an RRC connection resume process.

Step 502: The terminal device sends an RRC setup request message or an RRC resume request message to a second network device, where the RRC setup request message is used to request to set up a connection to a first cell, the RRC setup request message includes an establishment cause, the RRC resume request message is used to request to resume a connection to the first cell, and the RRC resume request message includes a resume cause.

When a first condition is met, the terminal device sets the establishment cause or the resume cause to a first cause value; or when a first condition is not met, the terminal device sets the establishment cause or the resume cause to a second cause value. The first condition is related to at least one of the MPS priority indication or the redirected frequency.

In this embodiment, if the terminal device successfully camps on the first cell, for example, when the terminal device has a service transmission requirement, the terminal device may send the RRC setup request message or the RRC resume request message to the second network device of the first cell. The terminal device may determine, based on whether the first condition is met, the establishment cause or the resume cause carried in the setup request message or the resume request message.

For example, after receiving the RRC setup request message or the RRC resume request message, the second network device may learn of a connection setup or resume cause by using the establishment cause or the resume cause, or learn of service-related information that triggers connection setup or connection resume, and accordingly determine to accept or reject the connection setup or resume request, or determine a priority of the connection setup or the connection resume.

It should be noted that, in an actual operation process, the first network device and the second network device may be the same or may be different. Specifically, determining may be performed based on network scopes of the first network device and the second network device of the first cell after redirection, a network classification standard, and the like. This is not limited herein.

It may be understood that, in a conventional technology, the MPS priority indication carried in redirection is only used for connection setup or connection resume after redirection, but valid applicable duration and an applicable scope of the MPS priority indication are not clarified. For example, this is mainly reflected in the following scenarios:
Scenario 1: The first network device redirects the terminal device to the specified frequency, but the terminal device finds no suitable cell on the specified frequency. The terminal device attempts to camp on the specified RAT, finds a suitable cell on a non-specified frequency, and camps on the suitable cell. When initiating connection setup or connection resume to the cell on the non-specified frequency, the terminal device cannot determine whether to perform access.

In the scenario 1, a cell that the terminal device camps on and attempts to access belongs to the specified RAT in redirection, and the terminal device initiates connection setup or connection resume in the cell, and cannot determine whether to perform access based on the MPS priority indication. For example, the first network device indicates to redirect the terminal device to an NR frequency f1. The terminal device finds no suitable cell on the frequency f1, and finally finds a suitable NR cell on a frequency f2 and sets up or resumes a connection in the cell. In this case, the terminal device cannot determine whether to perform access based on the MPS priority indication.

In the scenario 1, a cell that the terminal device camps on and attempts to access does not belong to the specified RAT in redirection, and the terminal device initiates connection setup or connection resume in the cell, and cannot determine whether to perform access based on the MPS priority indication. For example, the first network device indicates to redirect the terminal device to an LTE frequency f3. The terminal device finds no suitable cell on the frequency f3, and finds no suitable cell in E-UTRA either. Finally, the terminal device finds a suitable cell on an NR frequency f4 and sets up or resumes a connection in the cell. In this case, the terminal device cannot determine whether to perform access based on the MPS priority indication.

Scenario 2: The first network device redirects the terminal device to the specified frequency, but the terminal device finds no suitable cell on the specified frequency and the specified RAT. The terminal device successfully camps on a cell on a non-specified frequency or a non-specified RAT after long-time multi-round cell search and cell selection, and the terminal device cannot determine whether to perform access based on the MPS priority indication.

It may be understood that, when the first condition is met, the terminal device may set the establishment cause or the resume cause to the first cause value. Alternatively, the terminal device sets the establishment cause or the resume cause to the first cause value only when another condition is further met. When the first condition is not met, the terminal device does not set the establishment cause or the resume cause to the first cause value. In other words, the terminal device may set the establishment cause or the resume cause to the first cause value only when the first condition is met. It should be noted that the following logic of meeting the first condition is similar, and details are not described again. For the another condition that the terminal device needs to meet, refer to a specific example.

Optionally, in a possible implementation, before step 502, the method further includes the following steps.

Step 501a: The terminal device receives first indication information sent by the second network device, where the first indication information indicates that a first access identity or a first access class is allowed for access.

Step 501b: When the first condition is met, the terminal device considers that an access attempt is allowed.

In the implementation, before sending the RRC setup request message or the RRC resume request message, the terminal device performs access barring check. If the RRC connection setup or resume request initiated by the terminal device is a result of release including the MPS priority indication and redirection, the terminal device determines, based on the first indication information, whether the first access identity or the first access class is barred, and if the first access identity or the first access class is not barred and the first condition is met, determines that the second network device allows the terminal device to perform access based on the MPS priority indication. The first access identity may be an access identity corresponding to an MPS, and the first access class is an access class corresponding to the MPS or a high priority access class.

For example, if the first cell is an NR cell, the first access identity is an access identity 1. If a bit corresponding to the access identity 1 is set to 0, it indicates that the access attempt is allowed. If the RRC connection setup request or resume request initiated by the terminal device is the result of release including the MPS priority indication and redirection, the bit corresponding to the access identity 1 is set to 0, and the first condition is met, the terminal device considers that the current access attempt is allowed, or the terminal device determines that the second network device allows the current access attempt.

For example, if the first cell is an LTE cell or an E-UTRA cell, the first access class is an access class 12, 13, or 14. If a bit corresponding to the access class 12, 13, or 14 is set to 0, it indicates that the access attempt is allowed. If the RRC connection setup request or resume request initiated by the terminal device is a result of release including the MPS priority indication and redirection, the bit corresponding to any one of the access class 12, 13, or 14 is set to 0, and the first condition is met, the terminal device considers that the current access attempt is allowed, or the terminal device determines that the second network device allows the current access attempt.

Optionally, in a possible implementation, if the first access identity or the first access class is barred, or the first condition is not met, the terminal device continues to determine, based on other indication information, whether access is allowed.

In the implementation, for example, the terminal device may determine, based on a value relationship between a random number generated by the terminal device and an access control barring factor (Uac-Barring Factor) indicated by a network, whether the access is allowed.

Optionally, in a possible implementation, when the first condition is not met, the terminal device may consider that the MPS priority indication is invalid, or discard the MPS priority indication, or release the MPS priority indication. The terminal device can perform access based on the MPS priority indication only when the MPS priority indication is valid.

Optionally, in a possible implementation, the first condition includes at least one of the following:
the first cell belongs to the redirected frequency; the first cell and the redirected frequency correspond to a same RAT; the RRC setup request message or the RRC resume request message is a 1^{st} RRC setup request message or RRC resume request message sent after the RRC release message is received; a timer does not expire, and the timer indicates valid duration of the MPS priority indication; or the first cell belongs to a first area, and the first area is a home area or a service area of a terminal device.

In the implementation, each condition is specifically described as follows:
Condition 1: The first cell belongs to the redirected frequency.

The terminal device determines, based on the condition 1, the establishment cause or the resume cause carried in the setup request message or the resume request message. When the condition 1 is met, the establishment cause or the resume cause is the first cause value. When the condition 1 is not met, the establishment cause or the resume cause is the second cause value. It may be understood as that the terminal device determines whether the first cell to which the RRC connection is set up or the RRC connection is resumed is on the redirected frequency. If the first cell is on the redirected frequency, the terminal device may set the establishment cause or the resume cause to the first cause value. If the first cell is not on the redirected frequency, the terminal device sets the establishment cause or the resume cause to the second cause value.

For example, one or more of the following may be specifically included:
1.1. When the terminal device sets content of the establishment cause in the RRC setup request, if the RRC connection setup is the result of release including the MPS priority indication and redirection (or occurs after release including the MPS priority indication and redirection), and the RRC connection setup is performed on the redirected frequency, the terminal device sets the establishment cause to the first cause value; or if the RRC connection setup is not the result of release including the MPS priority indication and redirection (or does not occur after release including the MPS priority indication and redirection), or the RRC connection setup is not performed on the redirected frequency, the terminal device sets the establishment cause to the second cause value.
1.2. When the terminal device sets content of the resume cause in the RRC resume request, if the RRC connection resume occurs after release including the MPS priority indication and redirection (or the RRC connection resume is the result of release including the MPS priority indication and redirection), and the RRC connection resume is performed on the redirected frequency, the terminal device sets the resume cause to the first cause value; or if the RRC connection resume does not occur after release including the MPS priority indication and redirection (or the RRC connection resume is not the result of release including the MPS priority indication and redirection), or the RRC connection resume is not performed on the redirected frequency, the terminal device sets the resume cause to the second cause value.
1.3. When the terminal device performs access barring check, if the access attempt is the result of release including the MPS priority indication and redirection (or occurs after release including the MPS priority indication and redirection), the RRC connection setup or the RRC connection resume is performed on the redirected frequency, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the RRC connection setup or the RRC connection resume is not performed on the redirected frequency, or the first access identity or the first access class indicates that access is not allowed, the terminal device sets the establishment cause or the resume cause to the second cause value.

Optionally, in a possible implementation, if the first cell to which the terminal device sets up the RRC connection or resumes the RRC connection is not on the redirected frequency, the terminal device may consider that the MPS priority indication is invalid, or discard the MPS priority indication, or release the MPS priority indication. The terminal device can perform access based on the MPS priority indication only when the MPS priority indication is valid.

The condition 1 clarifies that the MPS priority indication is valid only on the redirected frequency, or access can be performed based on the MPS priority indication only on the redirected frequency, to clarify a valid scope of the MPS priority indication.

Condition 2: The first cell and the redirected frequency correspond to a same RAT.

The terminal device determines, based on the condition 2, the establishment cause or the resume cause carried in the setup request message or the resume request message. When the condition 2 is met, the establishment cause or the resume cause is the first cause value. When the condition 2 is not met, the establishment cause or the resume cause is the second cause value. It may be understood as that the terminal device determines whether the first cell to which the RRC connection is set up or the RRC connection is resumed is on the redirected RAT. If the first cell is on the redirected RAT, the terminal device may set the establishment cause or the resume cause to the first cause value. If the first cell is not on the redirected RAT, the terminal device sets the establishment cause or the resume cause to the second cause value. In this case, the RRC release message further includes the redirected RAT. The redirected RAT may be understood as a RAT corresponding to the redirected frequency.

For example, the following may be specifically included:
2.1. When the terminal device sets content of the establishment cause in the RRC setup request, if the RRC connection setup is the result of release including the MPS priority indication and redirection (or occurs after release including the MPS priority indication and redirection), and the RRC connection setup is performed on the redirected RAT, the terminal device sets the establishment cause to the first cause value; or if the RRC connection setup is not the result of release including the MPS priority indication and redirection (or does not occur after release including the MPS priority indication and redirection), or the RRC connection setup is not performed on the redirected RAT, the terminal device sets the establishment cause to the second cause value.
2.2. When the terminal device sets content of the resume cause in the RRC resume request, if the RRC connection resume occurs after release including the MPS priority indication and redirection (or the RRC connection resume is the result of release including the MPS priority indication and redirection), and the RRC connection resume is performed on the redirected RAT, the terminal device sets the resume cause to the first cause value; or if the RRC connection resume does not occur after release including the MPS priority indication and redirection (or the RRC connection resume is not the result of release including the MPS priority indication and redirection), or the RRC connection resume is not performed on the redirected RAT, the terminal device sets the resume cause to the second cause value.
2.3. When the terminal device performs access barring check, if the access attempt is the result of release including the MPS priority indication and redirection (or occurs after release including the MPS priority indication and redirection), the RRC connection setup or the RRC connection resume is performed on the redirected RAT, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the RRC connection setup or the RRC connection resume is not performed on the redirected RAT, or the first access identity or the first access class indicates that access is not allowed, the terminal device sets the establishment cause or the resume cause to the second cause value.

Optionally, if the first cell to which the terminal device sets up the RRC connection or resumes the RRC connection is not on the redirected RAT, the terminal device may consider that the MPS priority indication is invalid, or discard the MPS priority indication, or release the MPS priority indication. The terminal device can perform access based on the MPS priority indication only when the MPS priority indication is valid.

The condition 2 clarifies that the MPS priority indication is valid only on the redirected RAT, or access can be performed based on the MPS priority indication only on the redirected RAT, to clarify a valid scope of the MPS priority indication.

Condition 3: The RRC setup request message or the RRC resume request message is a 1^{st} RRC setup request message or RRC resume request message sent after the RRC release message is received.

The terminal device determines, based on the condition 3, the establishment cause or the resume cause carried in the setup request message or the resume request message. When the condition 3 is met, the establishment cause or the resume cause is the first cause value. When the condition 3 is not met, the establishment cause or the resume cause is the second cause value. It may be understood as that the terminal device determines whether the RRC connection setup or the RRC connection resume is the 1^{st}RRC setup request message or RRC resume request message sent after the RRC release message is received. If the RRC connection setup or the RRC connection resume is the 1^{st} RRC setup request message or RRC resume request message, the terminal device may set the establishment cause or the resume cause to the first cause value. If the RRC connection setup or the RRC connection resume is not the 1^{st} RRC setup request message or RRC resume request message, the terminal device sets the establishment cause or the resume cause to the second cause value.

For example, the following may be specifically included:
3.1. When the terminal device sets content of the establishment cause in the RRC setup request, if the RRC connection setup is the result of release including the MPS priority indication and redirection (or occurs after release including the MPS priority indication and redirection), and the RRC connection setup is a 1^{st} access attempt after the release, the terminal device sets the establishment cause to the first cause value; or if the RRC connection setup is not the result of release including the MPS priority indication and redirection (or does not occur after release including the MPS priority indication and redirection), or the RRC connection setup is not a 1^{st} access attempt after the release, it is considered that the first condition is not met, and the terminal device sets the establishment cause to the second cause value.
3.2. When the terminal device sets content of the establishment cause in the RRC resume request, if the RRC connection resume occurs after release including the MPS priority indication and redirection (or the RRC connection resume is the result of release including the MPS priority indication and redirection), and the RRC connection resume is a 1^{st} attempt after the release, the terminal device sets the resume cause to the first cause value; or if the RRC connection resume does not occur after release including the MPS priority indication and redirection (or the RRC connection resume is not the result of release including the MPS priority indication and redirection), or the RRC connection resume is not a 1^{st} attempt after the release, it is considered that the first condition is not met, and the terminal device sets the resume cause to the second cause value.
3.3. When the terminal device performs access barring check, if the access attempt is the result of release including the MPS priority indication and redirection (or occurs after release including the MPS priority indication and redirection), the access attempt is a 1^{st} attempt after the release, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the access attempt is not a 1^{st} attempt after the release, or the first access identity or the first access class indicates that access is not allowed, the terminal device sets the establishment cause or the resume cause to the second cause value.

Optionally, if the RRC connection setup is the 1^{st} access attempt after the release including the MPS priority indication and redirection, the terminal device may consider that the MPS priority indication is invalid, or discard the MPS priority indication, or release the MPS priority indication. The terminal device can perform access based on the MPS priority indication only when the MPS priority indication is valid.

The condition 3 clarifies that the MPS priority indication is valid only at the 1^{st} access attempt after the release including the MPS priority indication and redirection, or access can be performed based on the MPS priority indication only at the 1^{st} access attempt after the release including the MPS priority indication and redirection, to clarify a valid scope of the MPS priority indication.

Condition 4: A timer does not expire, and the timer indicates valid duration of the MPS priority indication.

The terminal device determines, based on the condition 4, the establishment cause or the resume cause carried in the setup request message or the resume request message. When the condition 4 is met, the establishment cause or the resume cause is the first cause value. When the condition 4 is not met, the establishment cause or the resume cause is the second cause value. It may be understood that the terminal device determines whether the timer expires. If the timer expires, the terminal device may set the establishment cause or the resume cause to the first cause value. If the timer does not expire, the terminal device sets the establishment cause or the resume cause to the second cause value.

It may be understood that, that the timer does not expire may be understood as that the timer is running. The MPS priority indication remains valid during the running of the timer. When the timer is running or the timer does not expire, the terminal device may use the indication to initiate RRC connection setup or connection resume, and perform access based on the MPS priority indication, for example, set the establishment cause or the resume cause to the first cause value. When the timer expires, it is considered that the first condition is not met, and the MPS priority indication is invalid. When the timer expires, the terminal device does not refer to the indication when initiating connection setup or connection resume, and cannot perform access based on the MPS priority indication. In this case, the condition 4 may be understood as that the MPS priority indication is valid.

For example, the following may be specifically included:
4.1. When the terminal device sets content in the RRC setup request, if the RRC connection setup is the result of release including the MPS priority indication and redirection (or occurs after release including the MPS priority indication and redirection), and the timer is running or the MPS priority indication is valid, the terminal device sets the establishment cause to the first cause value; or if the RRC connection setup is not the result of release including the MPS priority indication and redirection (or does not occur after release including the MPS priority indication and redirection), or the timer is not running or the MPS priority indication is not valid, it is considered that the first condition is not met, and the terminal device sets the establishment cause to the second cause value.
4.2. When the terminal device sets content in the RRC resume request, if the RRC connection resume occurs after release including the MPS priority indication and redirection (or the RRC connection resume is the result of release including the MPS priority indication and redirection), and the timer is running or the MPS priority indication is valid, the terminal device sets the resume cause to the first cause value; or if the RRC connection resume does not occur after release including the MPS priority indication and redirection (or the RRC connection resume is not the result of release including the MPS priority indication and redirection), or the timer is not running or the MPS priority indication is not valid, it is considered that the first condition is not met, and the terminal device sets the resume cause to the second cause value.
4.3. When the terminal device performs access barring check, if the access attempt is the result of release including the MPS priority indication and redirection (or occurs after release including the MPS priority indication and redirection), the timer is running or the MPS priority indication is valid, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the timer is not running or the MPS priority indication is not valid, or the first access identity or the first access class indicates that access is not allowed, the terminal device sets the establishment cause or the resume cause to the second cause value.

It should be noted that duration of the timer may be configured by using the network, or may be fixed duration. This is not limited herein. For example, the timer may be configured by the network. For example, the duration of the timer is included in the RRC release message. Optionally, if the network includes the MPS priority indication in the RRC release message and does not include a timer duration configuration, the MPS priority indication is always valid until the terminal device receives an RRC release message that does not include the MPS priority indication.

For example, if the timer is configured by using the network, a specific use scenario of the timer may be as follows:
1. At a moment T1, the network device sends an RRC release message to the terminal device, where the RRC release message includes a configuration MPS priority indication and a timer configuration.
2. After receiving the RRC release message, the terminal device performs a redirection process, and starts the timer.
3. From the moment T1 to a moment T2, the timer is running, the MPS priority indication is valid and available, and the terminal device initiates connection setup or connection resume in this period.
4. At the moment T2, when the timer expires, the terminal device releases or discards the MPS priority indication, and the terminal device no longer performs access based on the MPS priority indication when subsequently initiating connection setup or resume.

In addition, it should be noted that the timer may use a plurality of calculation methods such as time period subtraction and countdown. This is not limited herein, and is merely an example for description.

For example, the terminal device starts or restarts the timer when receiving the RRC release message including the MPS priority indication, or the terminal device starts or restarts the timer when receiving the RRC message including the timer duration configuration.

For example, the terminal device stops the timer when the RRC connection is successfully set up or the RRC connection is successfully resumed. Alternatively, the terminal device stops the timer when entering the RRC connected state. Alternatively, the terminal device stops the timer when RRC state switching occurs.

The condition 4 clarifies that the MPS priority indication is valid only when the timer is running, or access can be performed based on the MPS priority indication only when the timer is running, to clarify the valid duration of the MPS priority indication.

Condition 5: The first cell belongs to a first area, and the first area is a home area or a service area of a terminal device.

The home area may be a home country (home country), or the home area may be a home public land mobile network (home public land mobile network, HPLMN) and/or an equivalent PLMN thereof. The home country or the home PLMN may be understood as a country or a PLMN with which the terminal device registers. The service area may be a serving PLMN (current PLMN or serving PLMN) or a serving country of the terminal device. The serving PLMN or the serving country may be understood as a PLMN or a country that provides a service for the terminal device when the RRC release message is received. Considering that an access identity or an access class that is related to the priority of the MPS and that is delivered by the non-access stratum is valid only in the home country. Therefore, the MPS priority indication allocated by the network may also be limited to be valid only in the home country or the HPLMN. In addition, if the priority of the MPS is assigned to an RRC release message received by the terminal device in a current serving PLMN or serving country, it does not necessarily mean that the terminal device can use the priority of the MPS in another PLMN or another country.

The terminal device determines, based on the condition 5, the establishment cause or the resume cause carried in the setup request message or the resume request message. When the condition 5 is met, the establishment cause or the resume cause is the first cause value. When the condition 5 is not met, the establishment cause or the resume cause is the second cause value. It may be understood as that the terminal device determines whether the first cell belongs to the first area. If the first cell belongs to the first area, the terminal device may set the establishment cause to the first cause value. If the first cell does not belong to the first area, the terminal device sets the establishment cause to the second cause value.

For example, the following may be specifically included:
5.1. When the terminal device sets content in the RRC setup request, if the RRC connection setup is the result of release including the MPS priority indication and redirection (or occurs after release including the MPS priority indication and redirection), and the RRC connection setup is in the first area, the terminal device sets the establishment cause to the first cause value; or if the RRC connection setup is not the result of release including the MPS priority indication and redirection (or does not occur after release including the MPS priority indication and redirection), or the RRC connection setup is not in the first area, it is considered that the first condition is not met, and the terminal device sets the establishment cause to the second cause value.
5.2. When the terminal device sets content in the RRC resume request, if the RRC connection resume occurs after release including the MPS priority indication and redirection (or the RRC connection resume is the result of release including the MPS priority indication and redirection), and the RRC connection resume is in the first area, the terminal device sets the resume cause to the first cause value; or if the RRC connection resume does not occur after release including the MPS priority indication and redirection (or the RRC connection resume is not the result of release including the MPS priority indication and redirection), or the RRC connection resume is not in the first area, it is considered that the first condition is not met, and the terminal device sets the resume cause to the second cause value.
5.3. When the terminal device performs access barring check, if the access attempt is the result of release including the MPS priority indication and redirection (or occurs after release including the MPS priority indication and redirection), the access attempt is in the first area, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the access attempt is not in the first area, or the first access identity or the first access class indicates that access is not allowed, the terminal device sets the establishment cause or the resume cause to the second cause value.

It should be noted that, in this embodiment, for the scenario 2, the following special scenarios in which the MPS priority indication may be used theoretically are further excluded:
The terminal device finds no suitable cell on the redirected RAT. If the terminal device continues to attempt to find a suitable cell on another RAT, but finds no suitable cell, the non-access stratum triggers the terminal device to continue searching. If the terminal device finally finds a suitable cell on the redirected RAT or the redirected frequency, the terminal device may request RRC connection setup access or RRC connection resume in the cell. In this case, it is considered that the first condition is not met, and the terminal device should consider that the MPS priority indication is invalid. In the foregoing scenario, a reason why the terminal device considers that the MPS priority indication is invalid is that in this case, requesting RRC connection setup or RRC connection resume is not a result of redirection, but a result of triggering the terminal device by an upper layer to search the network.

Optionally, in a possible implementation, the terminal device determines the first condition based on second indication information sent by the network device.

In the possible implementation, after receiving the second instruction information, the terminal device determines the first condition based on the second instruction information. After determining the first condition, the terminal device determines whether to perform access based on the MPS priority indication.

For example, the RRC release message further includes the second indication information, and the second indication information is used to determine a condition for validity of the MPS priority indication, that is, the first condition. For example, the second indication information indicates to perform access on the redirected frequency or the redirected RAT based on the MPS priority indication.

In the implementation, the first condition may be obtained from the network device, so that validity of the MPS priority indication is more flexibly configured.

In this embodiment, the first condition is set, so that the valid use scope and the valid use duration of the MPS priority indication can be clarified, and the terminal device can access the network based on the MPS priority indication only when the first condition is met, to resolve the problem in the foregoing scenario, thereby managing validity of the MPS priority indication in the redirection process.

Optionally, in a possible implementation, the first cause value is an MPS priority access (mps-Priority Access) cause value or a high priority access (highPriorityAccess) cause value, and the second cause value is a cause value received from a non-access stratum (NAS).

For example, the first cause value is set to MPS priority access (mps-PriorityAccess). In this case, the first cell to which the connection is set up or the connection is resumed is an NR cell.

For example, the first cause value is set to high priority access (highPriorityAccess). In this case, the first cell to which the connection is set up or the connection is resumed is an LTE or E-UTRA cell.

In the implementation, different cause values are set, so that the terminal device performs access based on the priority of the MPS in the connection setup or resume process after redirection, to ensure a service priority and service continuity.

Optionally, in a possible implementation, any one or a combination of various conditions included in the first condition may be selected for an operation.

In the implementation, an example is provided.
1. The condition 1 and the condition 4 are used in combination: The terminal device determines whether the timer expires and whether the first cell to which the RRC connection is set up or the RRC connection is resumed is on the redirected frequency. If the timer does not expire and the first cell is on the redirected frequency, the terminal device may set the establishment cause or the resume cause to the first cause value. If the timer expires or the first cell is not on the redirected frequency, the terminal device sets the establishment cause or the resume cause to the second cause value.

For example, the following may be specifically included:
a. When the terminal device sets content in the RRC setup request, if the RRC connection setup is the result of release including the MPS priority indication and redirection (or occurs after release including the MPS priority indication and redirection), the RRC connection setup is performed on the redirected frequency, and the timer is running, the terminal device sets the establishment cause to the first cause value; or if the RRC connection setup is not the result of release including the MPS priority indication and redirection (or does not occur after release including the MPS priority indication and redirection), the RRC connection setup is not performed on the redirected frequency, or the timer is not running, the terminal device sets the establishment cause to the second cause value.
b. When the terminal device sets content in the RRC resume request, if the RRC connection resume occurs after release including the MPS priority indication and redirection (or the RRC connection resume is the result of release including the MPS priority indication and redirection), the RRC connection resume is performed on the redirected frequency, and the timer is running, the terminal device sets the resume cause to the first cause value; or if the RRC connection resume does not occur after release including the MPS priority indication and redirection (or the RRC connection resume is not the result of release including the MPS priority indication and redirection), the RRC connection resume is not performed on the redirected frequency, or the timer is not running, the terminal device sets the resume cause to the second cause value.
c. When the terminal device performs access barring check, if the access attempt is the result of release including the MPS priority indication and redirection (or occurs after release including the MPS priority indication and redirection), the RRC connection setup is performed on the redirected frequency, the timer is running, and the first access identity or the first access class indicates that access is allowed, the terminal device sets the resume cause or the establishment cause to the first cause value; or if the access attempt is not the result of release including the MPS priority indication and redirection (or does not occur after release including the MPS priority indication and redirection), the RRC connection setup is not performed on the redirected frequency, the timer is not running, or the first access identity or the first access class indicates that access is not allowed, the terminal device sets the establishment cause to the second cause value.

For example, when the timer is running, the MPS priority indication remains valid. If the terminal device initiates connection setup, connection resume, or access barring check on the redirected frequency in this period, and the terminal device may use the MPS priority indication, and perform access based on the MPS priority indication.

For example, when the timer is running, if the terminal device initiates connection setup or connection resume on the non-specified frequency, the terminal device initiates connection setup, connection resume, or access barring check without referring to the MPS priority indication, and does not perform access based on the MPS priority indication.

2. The condition 2 and the condition 4 are used in combination: The terminal device determines whether the timer expires and whether the first cell to which the RRC connection is set up or the RRC connection is resumed is on the redirected RAT. If the timer does not expire and the first cell is on the redirected RAT, the terminal device may set the establishment cause or the resume cause to the first cause value. If the timer expires or the first cell is not on the redirected RAT, the terminal device sets the establishment cause or the resume cause to the second cause value.

For example, the following may be specifically included:
a. When the terminal device sets content in the RRC setup request, if the RRC connection setup is the result of release including the MPS priority indication and redirection (or occurs after release including the MPS priority indication and redirection), the RRC connection setup is performed on the redirected RAT, and the timer is running, the terminal device sets the establishment cause to the first cause value; or if the RRC connection setup is not the result of release including the MPS priority indication and redirection (or does not occur after release including the MPS priority indication and redirection), the RRC connection setup is not performed on the redirected RAT, or the timer is not running, the terminal device sets the establishment cause to the second cause value.
b. When the terminal device sets content in the RRC resume request, if the RRC connection resume occurs after release including the MPS priority indication and redirection (or the RRC connection resume is the result of release including the MPS priority indication and redirection), the RRC connection resume is performed on the redirected RAT, and the timer is running, the terminal device sets the resume cause to the first cause value; or if the RRC connection resume does not occur after release including the MPS priority indication and redirection (or the RRC connection resume is not the result of release including the MPS priority indication and redirection), the RRC connection resume is not performed on the redirected RAT, or the timer is not running, the terminal device sets the resume cause to the second cause value.
c. When the terminal device performs access barring check, if the access attempt is the result of release including the MPS priority indication and redirection (or occurs after release including the MPS priority indication and redirection), the RRC connection setup is performed on the redirected RAT, the timer is running, and the first access identity or the first access class indicates that access is allowed, the terminal device sets the resume cause or the establishment cause to the first cause value; or if the access attempt is not the result of release including the MPS priority indication and redirection (or does not occur after release including the MPS priority indication and redirection), the RRC connection setup is not performed on the redirected RAT, the timer is not running, or the first access identity or the first access class indicates that access is not allowed, the terminal device sets the establishment cause to the second cause value.

For example, when the timer is running, the MPS priority indication remains valid. If the terminal device initiates connection setup, connection resume, or access barring check on the redirected RAT in this period, and the terminal device may use the MPS priority indication, and perform access based on the MPS priority indication.

For example, when the timer is running, if the terminal device initiates connection setup or connection resume on the non-specified RAT, the terminal device initiates connection setup, connection resume, or access barring check without referring to the MPS priority indication, and does not perform access based on the MPS priority indication.

3. The condition 2 and the condition 3 are used in combination: The terminal device determines whether the RRC setup request or the RRC resume request is a 1^{st} attempt on the redirected RAT. If the RRC setup request or the RRC resume request is the 1^{st} attempt on the redirected RAT, the terminal device may set the establishment cause or the resume cause to the first cause value. If the RRC setup request or the RRC resume request is not the 1^{st} attempt on the redirected RAT, the terminal device sets the establishment cause or the resume cause to the second cause value.

For example, the following may be specifically included:
a. When the terminal device sets content in the RRC setup request, if the RRC connection setup is the result of release including the MPS priority indication and redirection (or occurs after release including the MPS priority indication and redirection), and the RRC setup request is the 1^{st} attempt on the redirected RAT, the terminal device sets the establishment cause to the first cause value; or if the RRC connection setup is not the result of release including the MPS priority indication and redirection (or does not occur after release including the MPS priority indication and redirection), or the RRC setup request is not the 1^{st} attempt on the redirected RAT, the terminal device sets the establishment cause to the second cause value.
b. When the terminal device sets content in the RRC resume request, if the RRC connection resume occurs after release including the MPS priority indication and redirection (or the RRC connection resume is the result of release including the MPS priority indication and redirection), and the RRC resume request is the 1^{st} attempt on the redirected RAT, the terminal device sets the resume cause to the first cause value; or if the RRC connection resume does not occur after release including the MPS priority indication and redirection (or the RRC connection resume is not the result of release including the MPS priority indication and redirection), or the RRC resume request is not the 1^{st} attempt on the redirected RAT, the terminal device sets the resume cause to the second cause value.
c. When the terminal device performs access barring check, if the access attempt is the result of release including the MPS priority indication and redirection (or occurs after release including the MPS priority indication and redirection), the RRC setup request or the RRC resume request is the 1^{st} attempt on the redirected RAT, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the RRC setup request or the RRC resume request is not the 1^{st} attempt on the redirected RAT, or the first access identity or the first access class indicates that access is not allowed, the terminal device sets the establishment cause to the second cause value.

4. The condition 2, the condition 3, and the condition 5 are used in combination: The terminal device determines whether the RRC setup request or the RRC resume request is a 1^{st} attempt on the redirected RAT in the first area. If the RRC setup request or the RRC resume request is the 1^{st} attempt on the redirected RAT in the first area, the terminal device may set the establishment cause or the resume cause to the first cause value. If the RRC setup request or the RRC resume request is not the 1^{st} attempt on the redirected RAT in the first area, the terminal device sets the establishment cause or the resume cause to the second cause value. The following may be specifically included:
a. When the terminal device sets content in the RRC setup request, if the RRC connection setup is the result of release including the MPS priority indication and redirection (or occurs after release including the MPS priority indication and redirection), and the RRC setup request is the 1^{st} attempt on the redirected RAT in the first area, the terminal device sets the establishment cause to the first cause value; or if the RRC connection setup is not the result of release including the MPS priority indication and redirection (or does not occur after release including the MPS priority indication and redirection), or the RRC setup request is not the 1^{st} attempt on the redirected RAT in the first area, the terminal device sets the establishment cause to the second cause value.
b. When the terminal device sets content in the RRC resume request, if the RRC connection resume occurs after release including the MPS priority indication and redirection (or the RRC connection resume is the result of release including the MPS priority indication and redirection), and the RRC resume request is the 1^{st} attempt on the redirected RAT in the first area, the terminal device sets the resume cause to the first cause value; or if the RRC connection resume does not occur after release including the MPS priority indication and redirection (or the RRC connection resume is not the result of release including the MPS priority indication and redirection), or the RRC resume request is not the 1^{st} attempt on the redirected RAT in the first area, the terminal device sets the resume cause to the second cause value.
c. When the terminal device performs access barring check, if the access attempt is the result of release including the MPS priority indication and redirection (or occurs after release including the MPS priority indication and redirection), the RRC setup request or the RRC resume request is the 1^{st} attempt on the redirected RAT in the first area, and the first access identity or the first access class indicates that access is allowed, the terminal device sets the establishment cause or the resume cause to the first cause value; or if the access attempt is not the result of release including the MPS priority indication and redirection (or does not occur after release including the MPS priority indication and redirection), the RRC setup request or the RRC resume request is not the 1^{st} attempt on the redirected RAT in the first area, or the first access identity or the first access class indicates that access is not allowed, the terminal device sets the establishment cause or the resume cause to the second cause value.

It should be noted that a person skilled in the art may clearly understand that, in an actual operation process, various conditions included in the first condition may be combined based on an actual requirement or an experiment. For ease and brevity of description, for specific descriptions of a working process of a combination of the conditions in the first condition, refer to the descriptions of the foregoing combinations. Details are not described herein again.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

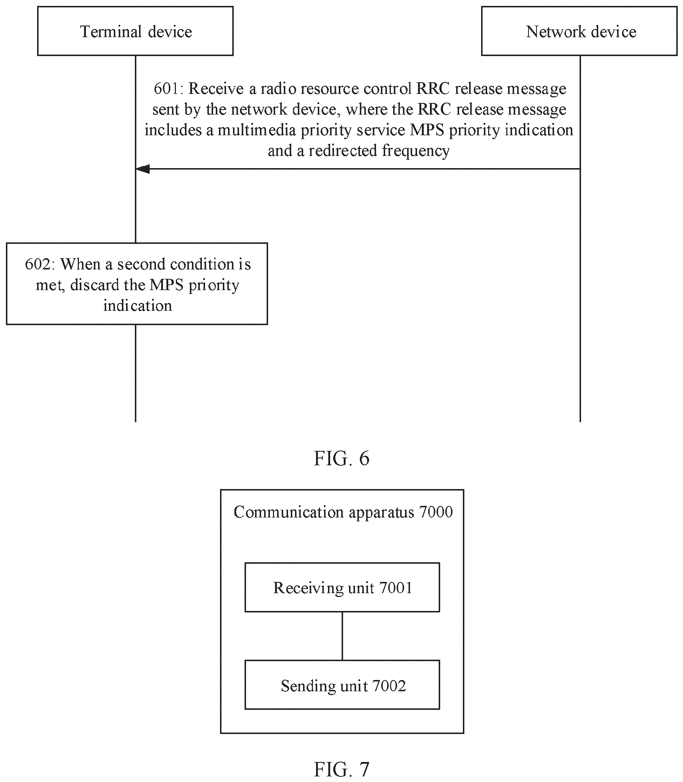

FIG. 6 is a schematic flowchart of another MPS management method according to an embodiment of this application. The MPS management method shown in FIG. 6 is applied to the terminal device and the network device shown in FIG. 1. As shown in FIG. 6, the MPS management method includes the following steps 601 and 602.

Step 601: Receive a radio resource control RRC release message sent by a network device, where the RRC release message includes a multimedia priority service MPS priority indication (mpsPriorityIndication) and a redirected frequency.

It should be noted that step 601 is similar to step 501. For a specific implementation and technical details, refer to step 501. Details are not described herein again.

Step 602: When a second condition is met, discard the MPS priority indication.

In this embodiment, after receiving the RRC release message delivered by the network device, the terminal device discards or releases the MPS priority indication when determining that the second condition is met, and considers that the MPS priority indication is invalid. After the MPS priority indication is discarded or released, access is no longer performed based on the MPS priority indication in RRC connection setup, connection resume, or access barring check initiated by the terminal device.

Optionally, in a possible implementation, the second condition includes at least one of the following:
the terminal device finds no suitable cell on the redirected frequency; the terminal device finds no suitable cell on a redirected RAT; the terminal device sends an RRC setup request message or an RRC resume request message; a timer expires, and the timer indicates valid duration of the MPS priority indication; or the terminal device camps on or accesses a cell outside a first area.

In the implementation, each condition in the second condition is specifically described as follows:
Condition 6: The terminal device finds no suitable cell on the redirected frequency.

After receiving the RRC release message that includes redirected information and the MPS priority indication, the terminal device searches for a suitable cell on the redirected frequency based on the redirected information. If the terminal device finds no suitable cell on the redirected frequency, the terminal device discards the MPS priority indication.

Condition 7: The terminal device finds no suitable cell on the redirected RAT. Alternatively, the terminal device starts a cell selection process.

After receiving the RRC release message that includes redirected information and the MPS priority indication, the terminal device searches for a suitable cell on the redirected frequency based on the redirected information. If the terminal device finds no suitable cell on the redirected frequency, the terminal device searches for a suitable cell on the redirected RAT. If the terminal device finds no suitable cell on a suitable RAT, the terminal device performs a cell selection process, and the terminal device discards the MPS priority indication.

Condition 8: The terminal device sends the RRC setup request message or the RRC resume request message.

After receiving the RRC release message that includes redirected information and the MPS priority indication, the terminal device finds a suitable cell to camp on and initiates connection setup or connection resume, and the terminal device discards the MPS priority indication.

Condition 9: The timer expires, and the timer indicates the valid duration of the MPS priority indication.

After the terminal device receives the RRC release message that includes redirected information and the MPS priority indication, if the timer expires, the terminal device discards the MPS priority indication. For related specific descriptions of starting, restarting, or stopping the timer, refer to step 502 in the foregoing embodiment.

Condition 10: The terminal device camps on or accesses the cell outside the first area.

After the terminal device receives the RRC release message that includes redirected information and the MPS priority indication, if the terminal device camps on or accesses the cell outside the first area, the terminal device discards the MPS priority indication. For related descriptions of the first area, refer to step 502 in the foregoing embodiment.

It should be noted that, a person skilled in the art may clearly understand that, in an actual operation process, any item in the second condition may be selected for implementation based on an actual requirement or an experiment, or various conditions included in the second condition may be combined for implementation. For ease and brevity of description, for specific descriptions of a combination implementation process of the conditions in the second condition, refer to the descriptions of the condition 1 to the condition 5 in the foregoing embodiments. Details are not described herein again.

FIG. 7 is a diagram of a structure of a communication apparatus according to an embodiment of this application. The communication apparatus 7000 may be one of the terminal devices 120a to 120j shown in FIG. 1, or may be a component (for example, a processor, a chip, or a chip system) of the terminal device. The communication apparatus 7000 includes:
a receiving unit 7001, configured to receive a radio resource control RRC release message, where the RRC release message includes a multimedia priority service MPS priority indication and a redirected frequency; and
a sending unit 7002, configured to send an RRC setup request message or an RRC resume request message, where the RRC setup request message is used to request to set up a connection to a first cell, the RRC setup request message includes an establishment cause, the RRC resume request message is used to request to resume a connection to the first cell, and the RRC resume request message includes a resume cause.

When a first condition is met, the establishment cause or the resume cause is a first cause value; or when a first condition is not met, the establishment cause or the resume cause is a second cause value, where the first condition is related to at least one of the MPS priority indication or the redirected frequency.

It should be noted that, in an actual operation process, the receiving unit 7001 and the sending unit 7002 may be located in a same module of a same communication apparatus, or may be located in different modules of a same communication apparatus, or may be located in different communication apparatuses. Specifically, determining may be performed based on a network range in which the receiving unit 7001 and the sending unit 7002 are located, a network classification standard, and the like. This is not limited herein.

In a possible implementation, the first condition includes at least one of the following:
the first cell belongs to the redirected frequency; the first cell and the redirected frequency correspond to a same RAT; the RRC setup request message or the RRC resume request message is a 1^{st} RRC setup request message or RRC resume request message sent after the RRC release message is received; a timer does not expire, and the timer indicates valid duration of the MPS priority indication; or the first cell belongs to a first area, and the first area is a home area or a service area of a terminal device.

It should be noted that a person skilled in the art may clearly understand that, in an actual operation process, various conditions included in the first condition may be combined based on an actual requirement or an experiment. For ease and brevity of description, for specific descriptions of a working process of a combination of the conditions in the first condition, refer to the descriptions of the foregoing combinations. Details are not described herein again.

In a possible implementation, the first cause value is an MPS priority access cause value.

In a possible implementation, the first cause value is a high priority access cause value.

In a possible implementation, the second cause value is a cause value received from a non-access stratum.

In a possible implementation, when the first condition is not met, the MPS priority indication is invalid.

In a possible implementation, before sending the RRC setup request message or the RRC resume request message, the receiving unit 7001 is further configured to:
receive indication information, where the indication information indicates that a first access identity or a first access class is allowed for access; and
when the first condition is met, consider that an access attempt is allowed.

In a possible implementation, the terminal device determines the first condition based on a currently used mobile communication protocol.

In a possible implementation, the RRC release message further includes the first condition.

After receiving the radio resource control RRC release message, the receiving unit determines the first condition based on the RRC release message sent by a network device.

In this embodiment, the terminal device receives the RRC setup request message or the RRC resume request message through the receiving unit 7001, and sends the RRC setup request message or the RRC resume request message through the sending unit 7002 when the terminal device successfully camps on the first cell and detects that the first condition is met. In this way, a condition for the terminal device to use a priority of an MPS is clarified, and validity of the priority of the MPS is managed, and communication impact caused by the terminal device incorrectly performing access based on the priority of the MPS on another terminal device that accesses a network is avoided.

In this embodiment, operations performed by the units in the communication apparatus 7000 are similar to those described in the method embodiment shown in FIG. 5, and may be used for functions of the terminal device in the foregoing method embodiment, and can also implement beneficial effects of the foregoing method embodiment. Details are not described herein again.

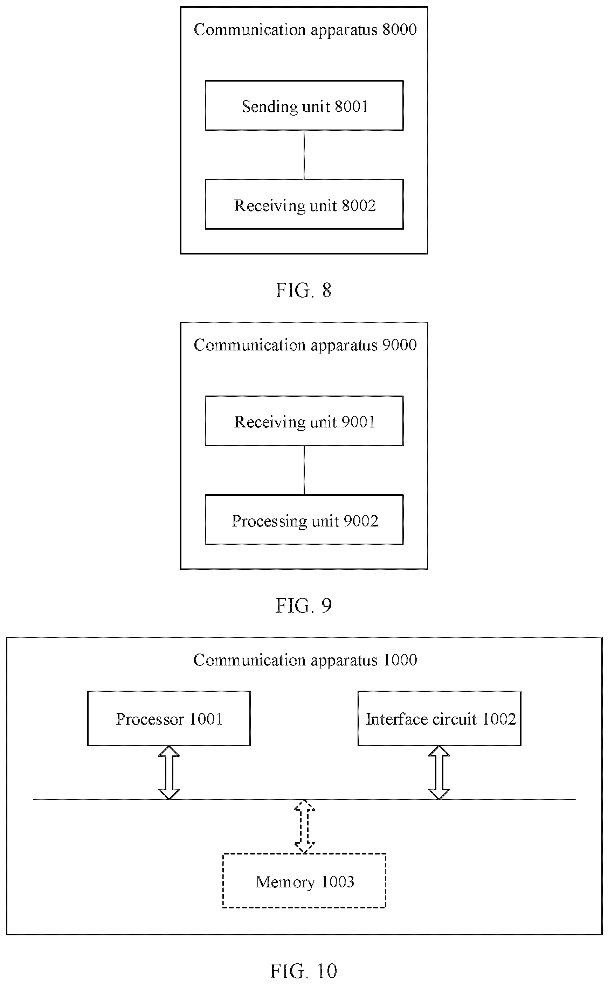

FIG. 8 is a diagram of a structure of another communication apparatus according to an embodiment of this application. The communication apparatus 8000 may be the network device 110a or 110b shown in FIG. 1, or may be a component (for example, a processor, a chip, or a chip system) of the network device. The communication apparatus 8000 includes:
a sending unit 8001, configured to send a radio resource control RRC release message to a terminal device, where the RRC release message includes a multimedia priority service MPS priority indication and a redirected frequency; and
a receiving unit 8002, configured to receive an RRC setup request message or an RRC resume request message, where the RRC setup request message is used to request to set up a connection to a first cell, the RRC setup request message includes an establishment cause, the RRC resume request message is used to request to resume a connection to the first cell, the RRC resume request message includes a resume cause, the establishment cause or the resume cause is a first cause value or a second cause value, the first cause value or the second cause value is related to a first condition, and the first condition is related to at least one of the MPS priority indication or the redirected frequency.

It should be noted that, in an actual operation process, the receiving unit 8001 and the sending unit 8002 may be located in a same module of a same communication apparatus, or may be located in different modules of a same communication apparatus, or may be located in different communication apparatuses. Specifically, determining may be performed based on a network range in which the receiving unit 8001 and the sending unit 8002 are located, a network classification standard, and the like. This is not limited herein.

In a possible implementation, the first condition includes at least one of the following:
the first cell belongs to the redirected frequency; the first cell and the redirected frequency correspond to a same RAT; the RRC setup request message or the RRC resume request message is a 1^{st} RRC setup request message or RRC resume request message sent after the RRC release message is received; a timer does not expire, and the timer indicates valid duration of the MPS priority indication; or the first cell belongs to a first area, and the first area is a home area or a service area of a terminal device.

It should be noted that a person skilled in the art may clearly understand that, in an actual operation process, various conditions included in the first condition may be combined based on an actual requirement or an experiment. For ease and brevity of description, for specific descriptions of a working process of a combination of the conditions in the first condition, refer to the descriptions of the foregoing combinations. Details are not described herein again.

In a possible implementation, the first cause value is an MPS priority access cause value.

In a possible implementation, the first cause value is a high priority access cause value.

In a possible implementation, the second cause value is a cause value received from a non-access stratum.

In a possible implementation, before receiving the RRC setup request message or the RRC resume request message, the sending unit 8001 is further configured to:
send indication information, where the indication information indicates that a first access identity or a first access class is allowed for access.

In a possible implementation, a mobile communication protocol currently used by the terminal device indicates the first condition.

In a possible implementation, the RRC release message further includes the first condition.

In this embodiment, in consideration of load balancing, a first network device delivers the RRC release message to the terminal device through the sending unit 8001, and the terminal device attempts, based on redirected information in the RRC release message, to camp on a suitable cell on the redirected frequency or a specified RAT. If the terminal device successfully camps on the specified frequency or the specified RAT, the terminal device performs access based on the MPS priority indication. If the terminal device fails to be redirected to the specified frequency or the specified RAT, the terminal device continues to attempt to search for and camp on another frequency or RAT. If the receiving unit 8002 receives the RRC setup request message or the RRC resume request message, the RRC setup request message or the RRC resume request message includes the first cause value, where the first cause value is related to the first condition, and the first condition is related to at least one of the MPS priority indication or the redirected frequency. In this case, it indicates that the terminal device accesses a second network device when using a priority of an MPS. In this way, a condition for the terminal device to use the priority of the MPS is clarified, and validity of the priority of the MPS is managed, and communication impact caused by the terminal device incorrectly performing access based on the priority of the MPS on another terminal device that accesses a network is avoided.

In this embodiment, operations performed by the units in the communication apparatus 8000 are similar to those described in the method embodiment shown in FIG. 5, and may be used for functions of the network device in the foregoing method embodiment, and can also implement beneficial effects of the foregoing method embodiment. Details are not described herein again.

FIG. 9 is a diagram of a structure of another communication apparatus according to an embodiment of this application. The communication apparatus 9000 may be one of the terminal devices 120a to 120j shown in FIG. 1, or may be a component (for example, a processor, a chip, or a chip system) of the terminal device. The communication apparatus 9000 includes:
a receiving unit 9001, configured to receive a radio resource control RRC release message sent by a network device, where the RRC release message includes a multimedia priority service MPS priority indication (Mps Priority Indication) and a redirected frequency; and
a processing unit 9002, configured to: when a second condition is met, discard the MPS priority indication.

In this embodiment, after the receiving unit 9001 receives the RRC release message delivered by the network device, the processing unit 9002 discards or releases the MPS priority indication when determining that the second condition is met. After the MPS priority indication is discarded or released, access is no longer performed based on the MPS priority indication in RRC connection setup, connection resume, or access barring check initiated by the terminal device.

In a possible implementation, the second condition includes at least one of the following:
the terminal device finds no suitable cell on the redirected frequency; the terminal device finds no suitable cell on a redirected RAT; the terminal device sends an RRC setup request message or an RRC resume request message; a timer expires, and the timer indicates valid duration of the MPS priority indication; or the terminal device camps on or accesses a cell outside a home area.

It should be noted that, a person skilled in the art may clearly understand that, in an actual operation process, any item in the second condition may be selected for implementation based on an actual requirement or an experiment, or various conditions included in the second condition may be combined for implementation. For ease and brevity of description, for specific descriptions of a combination implementation process of the conditions in the second condition, refer to the descriptions of the condition 1 to the condition 5 in the foregoing embodiments. Details are not described herein again.

In this embodiment, operations performed by the units in the communication apparatus 9000 are similar to those described in the method embodiment shown in FIG. 6, and may be used for functions of the terminal device in the foregoing method embodiment, and can also implement beneficial effects of the foregoing method embodiment. Details are not described herein again.

FIG. 10 is a diagram of a structure of another communication apparatus according to an embodiment of this application. The communication apparatus 1000 may be a network device, or may be a terminal device, or may be a chip, a chip system, a processor, or the like that supports the terminal device or the network device in implementing the foregoing methods. The apparatus may be configured to implement the method described in FIG. 5 in embodiments of this application. For details, refer to the descriptions in the foregoing method embodiments.

The apparatus 1000 includes one or more processors 1001 and an interface circuit 1002. The processor 1001 and the interface circuit 1002 are coupled to each other. It may be understood that the interface circuit 1002 may be a transceiver or an input/output interface.

Optionally, the communication apparatus 1000 may include one or more memories 1003, configured to store instructions executed by the processor 1001, store input data required by the processor 1001 to run instructions, or store data generated after the processor 1001 runs instructions.

In another optional design, the processor 1001 may include a transceiver unit configured to implement receiving and sending functions. For example, the transceiver unit may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, the communication apparatus 1000 may include a circuit. The circuit may implement the sending, receiving, or communication function in the foregoing method embodiments.

When the communication apparatus 1000 is a chip used in a terminal device, the terminal chip implements a function of the terminal device in the foregoing method embodiments. The terminal chip receives information from another module (for example, a radio frequency module or an antenna) in the terminal device, where the information is sent by a network device to the terminal device; or the terminal chip sends information to another module (for example, a radio frequency module or an antenna) in the terminal device, where the information is sent by the terminal device to a network device.

When the communication apparatus 1000 is a module used in a network device, the network device module in the network device implements a function of the network device in the foregoing method embodiments. The network device module receives information from another module (for example, a radio frequency module or an antenna) in the network device, where the information is sent by a terminal device to the network device; or the network device module sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor 1001 in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or any regular processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal device. Alternatively, the processor and the storage medium may exist in a network device or a terminal device as discrete components.

The apparatus described in the foregoing embodiments may be a network device or a terminal device. However, the scope of the apparatus described in this application is not limited thereto, and a structure of the apparatus may not be limited to that in FIG. 10. The apparatus may be an independent device, or may be a part of a large device. For example, the apparatus may be:
(1) an independent integrated circuit IC, a chip, or a chip system or subsystem;
(2) a set including one or more ICs, where optionally, the IC set may further include a storage component configured to store data and/or instructions;
(3) an ASIC, for example, a modem (MSM);
(4) a module that may be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

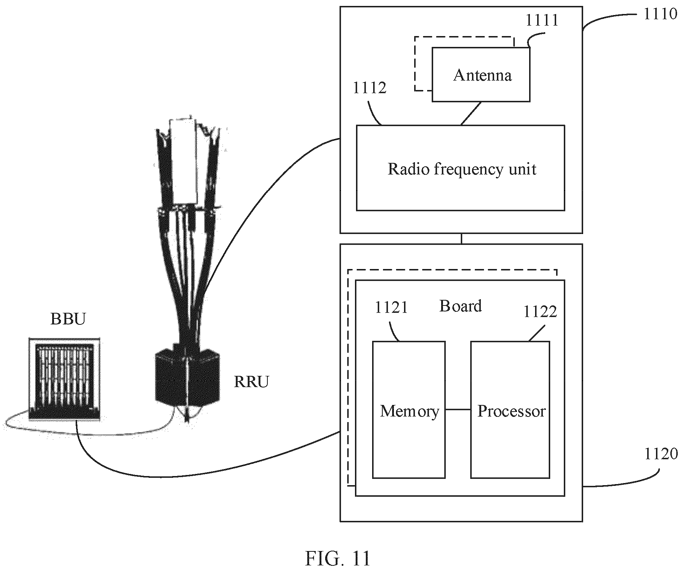

When the communication apparatus in this embodiment of this application is a network device, the communication apparatus may be shown in FIG. 11. The communication apparatus may include one or more radio frequency units, such as a remote radio unit (remote radio unit, RRU) 1110 and one or more baseband units (baseband unit, BBU) (which may also be referred to as a digital unit, digital unit, DU) 1120. The RRU 1110 may be referred to as a transceiver module. The transceiver module may include a sending module and a receiving module, or the transceiver module may be a module that can implement sending and receiving functions. The transceiver module may correspond to the sending unit 8001 or the receiving unit 8002 in FIG. 8, that is, the transceiver module may perform actions performed by the sending unit 8001 and the receiving unit 8002. Optionally, the transceiver module may also be referred to as a transceiver machine, a transceiver circuit, a transceiver, or the like, and may include at least one antenna 1111 and a radio frequency unit 1112. The RRU 1110 is mainly configured to receive and send a radio frequency signal, and perform conversion between a radio frequency signal and a baseband signal. The BBU 1110 is mainly configured to perform baseband processing, control a base station, and the like. The RRU 1110 and the BBU 1120 may be physically disposed together, or may be physically separated, that is, a distributed base station.

The BBU 1120 is a control center of the base station, may also be referred to as a processing module, and is mainly configured to complete a baseband processing function, such as channel coding, multiplexing, modulation, and spreading. In addition, the processing module may control actions performed by the sending unit 8001 and the receiving unit 8002 in FIG. 8. For example, the BBU (processing module) may be configured to control the base station to perform an operation procedure related to the network device in the foregoing method embodiments.

In an example, the BBU 1120 may include one or more boards, and a plurality of boards may jointly support a radio access network (for example, an LTE network) of a single access standard, or may separately support radio access networks (for example, an LTE network, a 5G network, or another network) of different access standards. The BBU 1120 further includes a memory 1121 and a processor 1122. The memory 1121 is configured to store necessary instructions and necessary data. The processor 1122 is configured to control the base station to perform a necessary action, for example, configured to control the base station to perform an operation procedure related to the network device in the foregoing method embodiments. The memory 1121 and the processor 1122 may serve one or more boards. In other words, a memory and a processor may be disposed on each board. Alternatively, a plurality of boards may share a same memory and a same processor. In addition, a necessary circuit may further be disposed on each board.

An embodiment of this application further provides a computer-readable medium storing a computer program. When the computer program is executed by a computer, functions of any one of the foregoing method embodiments are implemented.

An embodiment of this application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but do not limit the scope of embodiments of this application. Sequence numbers of the foregoing processes do not mean an execution sequence, and the execution sequence of the processes should be determined based on functions and internal logic of the processes.

## Claims

1. A multimedia priority service MPS management method, comprising:
receiving a radio resource control RRC release message, wherein the RRC release message comprises an MPS priority indication and a redirected frequency; and
sending an RRC setup request message or an RRC resume request message, wherein the RRC setup request message is used to request to set up a connection to a first cell, the RRC setup request message comprises an establishment cause, the RRC resume request message is used to request to resume a connection to the first cell, and the RRC resume request message comprises a resume cause, wherein
when a first condition is met, the establishment cause or the resume cause is a first cause value; or when a first condition is not met, the establishment cause or the resume cause is a second cause value, wherein the first condition is related to at least one of the MPS priority indication or the redirected frequency.

2. The method according to claim 1, wherein the first condition comprises at least one of the following:
the first cell belongs to the redirected frequency;
the first cell and the redirected frequency correspond to a same radio access technology RAT;
the RRC setup request message or the RRC resume request message is a 1^{st} RRC setup request message or RRC resume request message sent after the RRC release message is received;
a timer does not expire, and the timer indicates valid duration of the MPS priority indication; or
the first cell belongs to a first area, and the first area is a home area or a service area of a terminal device.

3. The method according to claim 1 or 2, wherein the first cause value is an MPS priority access cause value.

4. The method according to claim 1 or 2, wherein the first cause value is a high priority access cause value.

5. The method according to any one of claims 1 to 4, wherein the second cause value is a cause value received from a non-access stratum.

6. The method according to any one of claims 1 to 5, wherein before the sending an RRC setup request message or an RRC resume request message, the method further comprises:
receiving first indication information, wherein the first indication information indicates that a first access identity or a first access class is allowed for access; and
when the first condition is met, considering that an access attempt is allowed.

7. The method according to any one of claims 1 to 6, wherein when the first condition is not met, the MPS priority indication is invalid.

8. An MPS management method, comprising:
sending a radio resource control RRC release message to a terminal device, wherein the RRC release message comprises a multimedia priority service MPS priority indication and a redirected frequency; and
receiving an RRC setup request message or an RRC resume request message, wherein the RRC setup request message is used to request to set up a connection to a first cell, the RRC setup request message comprises an establishment cause, the RRC resume request message is used to request to resume a connection to the first cell, the RRC resume request message comprises a resume cause, the establishment cause or the resume cause is a first cause value or a second cause value, the first cause value or the second cause value is related to a first condition, and the first condition is related to at least one of the MPS priority indication or the redirected frequency.

9. The method according to claim 8, wherein the first condition comprises at least one of the following:
the first cell belongs to the redirected frequency;
the first cell and the redirected frequency correspond to a same RAT;
the RRC setup request message or the RRC resume request message is a 1^{st} RRC setup request message or RRC resume request message sent after the RRC release message is received;
a timer does not expire, and the timer indicates valid duration of the MPS priority indication; or
the first cell belongs to a first area, and the first area is a home area or a service area of a terminal device.

10. The method according to claim 8 or 9, wherein the first cause value is an MPS priority access cause value.

11. The method according to claim 8 or 9, wherein the first cause value is a high priority access cause value.

12. The method according to any one of claims 8 to 11, wherein the second cause value is a cause value received from a non-access stratum.

13. The method according to any one of claims 8 to 12, wherein before the receiving an RRC setup request message or an RRC resume request message, the method further comprises:
sending first indication information, wherein the first indication information indicates that a first access identity or a first access class is allowed for access.

14. A communication apparatus, comprising:
a receiving unit, configured to receive a radio resource control RRC release message, wherein the RRC release message comprises a multimedia priority service MPS priority indication and a redirected frequency; and
a sending unit, configured to send an RRC setup request message or an RRC resume request message, wherein the RRC setup request message is used to request to set up a connection to a first cell, the RRC setup request message comprises an establishment cause, the RRC resume request message is used to request to resume a connection to the first cell, and the RRC resume request message comprises a resume cause, wherein
when a first condition is met, the establishment cause or the resume cause is a first cause value; or when a first condition is not met, the establishment cause or the resume cause is a second cause value, wherein the first condition is related to at least one of the MPS priority indication or the redirected frequency.

15. The apparatus according to claim 14, wherein the first condition comprises at least one of the following:
the first cell belongs to the redirected frequency;
the first cell and the redirected frequency correspond to a same RAT;
the RRC setup request message or the RRC resume request message is a 1^{st} RRC setup request message or RRC resume request message sent after the RRC release message is received;
a timer does not expire, and the timer indicates valid duration of the MPS priority indication; or
the first cell belongs to a first area, and the first area is a home area or a service area of a terminal device.

16. The apparatus according to claim 14 or 15, wherein the first cause value is an MPS priority access cause value.

17. The apparatus according to claim 14 or 15, wherein the first cause value is a high priority access cause value.

18. The apparatus according to any one of claims 14 to 17, wherein the second cause value is a cause value received from a non-access stratum.

19. The apparatus according to any one of claims 14 to 18, wherein before sending the RRC setup request message or the RRC resume request message, the receiving unit is further configured to:
receive first indication information, wherein the first indication information indicates that a first access identity or a first access class is allowed for access; and
when the first condition is met, consider that an access attempt is allowed.

20. The apparatus according to any one of claims 14 to 19, wherein when the first condition is not met, the MPS priority indication is invalid.

21. A communication apparatus, comprising:
a sending unit, configured to send a radio resource control RRC release message to a terminal device, wherein the RRC release message comprises a multimedia priority service MPS priority indication and a redirected frequency; and
a receiving unit, configured to receive an RRC setup request message or an RRC resume request message, wherein the RRC setup request message is used to request to set up a connection to a first cell, the RRC setup request message comprises an establishment cause, the RRC resume request message is used to request to resume a connection to the first cell, the RRC resume request message comprises a resume cause, the establishment cause or the resume cause is a first cause value or a second cause value, the first cause value or the second cause value is related to a first condition, and the first condition is related to at least one of the MPS priority indication or the redirected frequency.

22. The apparatus according to claim 21, wherein the first condition comprises at least one of the following:
the first cell belongs to the redirected frequency;
the first cell and the redirected frequency correspond to a same RAT;
the RRC setup request message or the RRC resume request message is a 1^{st} RRC setup request message or RRC resume request message sent after the RRC release message is received;
a timer does not expire, and the timer indicates valid duration of the MPS priority indication; or
the first cell belongs to a first area, and the first area is a home area or a service area of a terminal device.

23. The apparatus according to claim 21 or 22, wherein the first cause value is an MPS priority access cause value.

24. The apparatus according to claim 21 or 22, wherein the first cause value is a high priority access cause value.

25. The apparatus according to any one of claims 21 to 24, wherein the second cause value is a cause value received from a non-access stratum.

26. The apparatus according to any one of claims 21 to 25, wherein before receiving the RRC setup request message or the RRC resume request message, the sending unit is further configured to send first indication information, wherein the first indication information indicates that a first access identity or a first access class is allowed for access.

27. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 7 by using a logic circuit or by executing code instructions.

28. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 8 to 13 by using a logic circuit or by executing code instructions.

29. A communication system, comprising the communication apparatus according to claim 27 and/or the communication apparatus according to claim 28.

30. A computer program product, wherein when the computer product is executed by a computer, the method according to any one of claims 1 to 7 is implemented, or the method according to any one of claims 8 to 13 is implemented.

31. A computer-readable storage medium, wherein the storage medium stores a computer program or instructions, and when the computer program or the instructions are executed by a communication apparatus, the method according to any one of claims 1 to 7 is implemented, or the method according to any one of claims 8 to 13 is implemented.
